# EUROPEAN PATENT SPECIFICATION

(11) **EP 3 310 122 B1**
(45) Date of publication and mention of the grant of the patent: **18.03.2020**
(21) Application number: 16807231.2
(22) Date of filing: 02.05.2016
(51) Int. Cl.: H04W 76/30, H04W 76/36, H04W 84/18, H04W 4/02, H04W 4/80

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS, ET PROGRAMME

(30) Priority: 09.06.2015 JP 2015116198
(43) Date of publication of application: 18.04.2018
(73) Proprietor: Sony Corporation, Tokyo 108-0075 (JP)
(72) Inventor: ITAYA, Natsuki, Tokyo 108-0075 (JP)
(74) Representative: Witte, Weller & Partner Patentanwälte mbB
(86) International application number: PCT/JP2016/063559
(87) International publication number: WO 2016/199524

(56) References cited:
- EP-A1- 1 662 707
- WO-A1-2014/077678
- WO-A1-2015/002232
- JP-A- 2004 128 709
- JP-A- 2005 012 724
- JP-A- 2005 064 937
- US-A1- 2004 078 449

## Description

### TECHNICAL FIELD

The present technology relates to information processing apparatuses. In particular, the present technology relates to an information processing apparatus and method for handling information to be exchanged using wireless communication, and a program for causing a computer to execute the information processing method.

### BACKGROUND ART

There has been a wireless communication technology for exchanging information using wireless communication. For example, a communication method for mutually connecting surrounding devices autonomously (e.g., ad hoc communication or ad hoc network) has been proposed (see, e.g., Patent Document 1).

Patent Document 2, according to its abstract, relates to a master communication device capable of simultaneously communicating with slave communication devices within a limited number prescribed in advance, comprising: a communication judgment unit which judges whether or not one of the slave communication devices which has issued communication request is currently connected; a communication connection unit which connects the slave communication device judged not to be connected by the communication judgment unit; a connected number judgment unit which judges whether or not the number of the slave communication devices connected currently reaches a prescribed number not more than the limited number; a release selection unit which selects at least one of the slave communication devices to be released, when determined to have reached the prescribed number; and a communication release unit which releases the selected slave communication device.

Patent Document 3, according to its abstract, relates to a method of connecting a further wireless Bluetooth node to a wireless Bluetooth node which participates in a wireless communication network. The method comprises: - initiating, by the further wireless Bluetooth node, a wireless network connection with the wireless Bluetooth node; - determining, by the wireless Bluetooth node, in how many slave connections the wireless Bluetooth node is involved; and - determining by the wireless Bluetooth node, if the connection initiation by the further wireless Bluetooth node is a priority connection request and - setting the predetermined number of free slave connections to one if the connection initiation by the further wireless Bluetooth node is a priority connection request and - setting the predetermined number of free slave connections to two if the connection initiation by the further wireless Bluetooth node is not a priority connection request.

Patent Document 4, according to its abstract, relates to a game device which can connect to a plurality of wireless controllers. A game device of the present invention has a plurality of communication modules, each serving as a master, which can wire-lessly connect to slaves. One communication module performs an inquiry procedure for establishing a connection with a plurality of slaves, and the other communication module performs no inquiry procedure. The communication module that has issued the inquiry transmits, to a control unit, information relating to a slave that is not connected to the module itself, and the other communication module acquires the information from the control unit, thus obtaining information necessary for establishing a connection with a slave. This allows for quickly establishing a connection with a slave.

Patent Document 5 discloses a network device and user equipment. According to its abstract an eNB controls a radio connection established with another communication device by UE. The eNB controls the number of radio connections established by the UE to an allowable connection number or less, the allowable connection number being the upper limit number of radio connections allowed for the UE.

### CITATION LIST

### PATENT DOCUMENT

Patent Document 1: Japanese Patent Application Laid-Open No. 2009-239385
Patent Document 2: US 2004/078449 A1
Patent Document 3: WO 2014/077678 A1
Patent Document 4: EP 1 662 707 A1
Patent Document 5: WO 2015/002232 A1

### SUMMARY OF THE INVENTION

### PROBLEMS TO BE SOLVED BY THE INVENTION

According to the conventional technology mentioned above, two devices can mutually exchange various kinds of data using wireless communication instead of wired connection. In addition, each device in such a network does not rely on a master station, such as a control device, to perform mutual communication with surrounding devices. Further, if a new device appears in the surroundings, the ad hoc network allows the new device to freely join the network. Therefore, coverage of the network can expand in accordance with the increase of the surrounding devices.

Meanwhile, in addition to the mutual connection with the surrounding devices autonomously, each device can transfer information exchanged with other devices in a bucket-brigade manner (i.e., multihop relay method). In addition, a network that performs multihop is commonly known as a mesh network.

Thus, devices in the ad hoc or mesh network can freely communicate with surrounding devices. In addition, connection with the surrounding devices can lead to expansion of the network.

Now, for example, an upper limit number of devices that can be directly connected to each device are often set for the devices belonging to the network. Therefore, it is expected that some devices may have reached the upper limit number of devices that are directly connected. Thus, if a new device requests for connection to a device that has reached the upper limit number of devices that are directly connected, it is not possible to establish connection with the new device because the upper limit number is reached. In other words, even if a new device requests for connection to join the network, connection cannot be established with the device that has reached the upper limit number of devices. Accordingly, it is important to improve connectivity to the network so as to allow the new device to appropriately join the network.

The present technology has been made in view of the above situations, and it is an object to improve connectivity to a network.

### SOLUTIONS TO PROBLEMS

The claimed subject matter is defined in the appended independent claims. Further refinements are provided in the dependent claims.

### EFFECTS OF THE INVENTION

The present technology can achieve an excellent effect of improving connectivity to the network.

### BRIEF DESCRIPTION OF DRAWINGS

Fig. 1 illustrates a system configuration example of a communication system 10 according to an embodiment of the present technology.
Fig. 2 is a block diagram illustrating an example of a functional configuration of an information processing apparatus 100 according to the embodiment of the present technology.
Fig. 3 is a flowchart illustrating an example of processing procedure of communication processing by the information processing apparatus 100 according to the embodiment of the present technology.
Fig. 4 is a flowchart illustrating an example of setting processing of a threshold M of room for connection of the communication processing by the information processing apparatus 100 according to the embodiment of the present technology.
Fig. 5 is a flowchart illustrating an example of device-to-be-disconnected selection processing and disconnection processing of the communication processing by the information processing apparatus 100 according to an example.
Fig. 6 is a flowchart illustrating an example of device-to-be-disconnected selection processing and disconnection processing of the communication processing by the information processing apparatus 100 according to an example.
Fig. 7 is a flowchart illustrating an example of device-to-be-disconnected selection processing and disconnection processing of the communication processing by the information processing apparatus 100.
Fig. 8 is a flowchart illustrating an example of reachable device inspection processing of the communication processing by the information processing apparatus 100.
Fig. 9 illustrates a display example of a setting screen 200 for setting a priority connection device by the information processing apparatus 100.
Fig. 10 illustrates a display example of a notifying screen 210 for notifying a device of a priority connection device set by the information processing apparatus 100.
Fig. 11 illustrates an example of transition of connection with other devices in a case where an information processing apparatus 500 moves.
Fig. 12 illustrates an example of transition of connection with other devices in a case where the information processing apparatus 500 moves.
Fig. 13 illustrates an example of transition of connection with other devices in a case where the information processing apparatus 500 moves.
Fig. 14 illustrates an example of transition of connection with other devices in a case where the information processing apparatus 500 moves.
Fig. 15 schematically illustrates an example of time division processing of connection capacity of the information processing apparatus 100 according to the embodiment of the present technology.
Fig. 16 is a block diagram schematically illustrating a configuration example of a smartphone.
Fig. 17 is a block diagram schematically illustrating a configuration example of a car navigation apparatus.

### MODE FOR CARRYING OUT THE INVENTION

Modes for embodying the present technology (hereinafter referred to as an embodiment) will be described below. The description will be given in the following order.
1. Embodiment (Example of allocating room for connection of devices belonging to a network)
2. Application Example

### <1. Embodiment>

### [Configuration Example of Communication System]

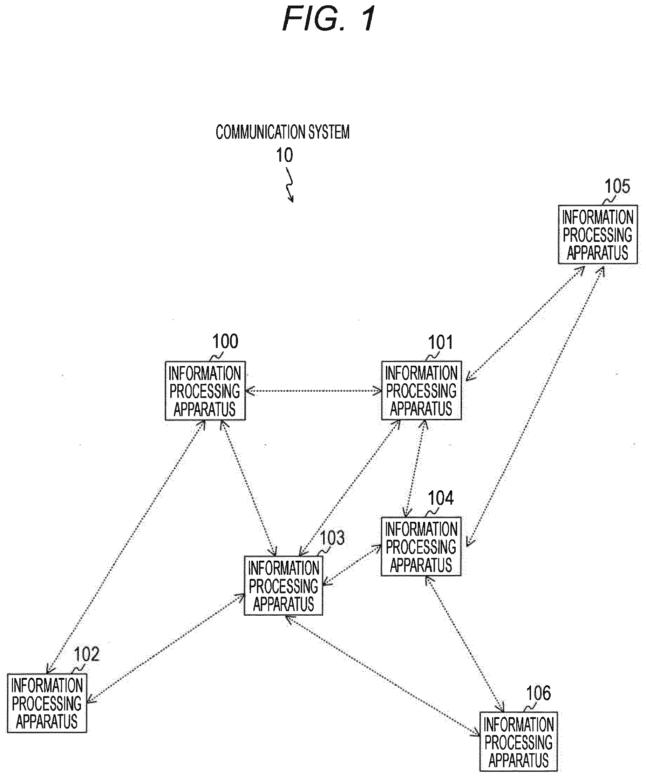

Fig. 1 illustrates a system configuration example of a communication system 10 according to an embodiment of the present technology.

The communication system 10 includes information processing apparatuses 100 to 106. The information processing apparatuses 100 to 106 are, for example, mobile or fixed information processing apparatuses having a wireless communication function. It is noted that the mobile information processing apparatuses include, for example, smartphones, mobile phones, tablet terminals, game machines, reproducing apparatuses (to reproduce images or music), or imaging devices. Meanwhile, the fixed information processing apparatuses include, for example, printers, personal computers, television sets, or other home appliances (e.g., information processing apparatuses connected to a power supply for use).

For example, the information processing apparatuses 100 to 106 belong to the same network on L2 (second layer) and may communicate with each other on or higher than L3 (third layer) as needed. For example, in the case of a mesh network according to Institute of Electrical and Electronics Engineers (IEEE) 802.11s, the same service set identifier (SSID) and passphrase are used. In addition, mutual communication is available wherever the apparatus is located in the network using the network scheme of L3, such as an Internet Protocol (IP).

In addition, the information processing apparatuses belonging to the same network can connect from anywhere so long as the apparatuses are located within the reach of electronic waves. For example, in the case of the mesh network according to IEEE802.11s, the information processing apparatus can connect with another information processing apparatus that belongs to the same network, if such an apparatus exists in the reach of the electronic waves, so that connectivity to the entire network can be obtained.

Now, a communication method, such as ad hoc communication, an ad hoc network, or a mesh network has been known as a communication method for autonomously interconnecting with nearby information processing apparatuses. In such a network, each information processing apparatus does not rely on a master station (e.g., control apparatus), and can mutually communicate with nearby information processing apparatuses.

For example, autonomous interconnection with nearby information processing apparatuses is possible by the communication method, such as Wi-Fi (Wireless Fidelity, registered trademark) or Bluetooth (registered trademark).

For example, the mesh network using IEEE802.11s has a feature that an equal relationship is established among devices. In other words, the mesh network using IEEE802.11s can provide a mesh network that does not include the master-slave relationship as in the Wi-Fi network. In addition, the mesh network using the IEEE802.11s has a feature that selection of paths can be switched automatically. In other words, in a case where a link is disconnected, the mesh network using IEEE802.11s can automatically switch to another path that uses another link. In addition, the mesh network using IEEE802.11s has a feature of controlling power to be transmitted. In other words, the mesh network using IEEE802.11s can control power to be transmitted of each information processing apparatus, thus changing an outreach distance or communication speed. In addition, the mesh network using IEEE802.11s has a feature that time synchronization can be performed among the information processing apparatuses. For example, the mesh network using IEEE802.11s can carry out time synchronization in the order of m seconds.

Accordingly, the embodiment of the present technology will be described by taking a mesh network (ad hoc network) using IEEE802.11s as an example communication method for autonomously interconnecting nearby information processing apparatuses.

For example, if a new information processing apparatus is added nearby in the ad hoc network, the newly added information processing apparatus can also freely join the network. For example, it is assumed that only the information processing apparatuses 100 to 104 among the information processing apparatuses 100 to 106 are firstly joining the ad hoc network. In this case, the information processing apparatuses 105 and 106 are supposed to be added sequentially. In such a case, it is possible to expand the network coverage according to the increase of the information processing apparatuses (nearby information processing apparatuses). In other words, it is possible to expand the network coverage as the information processing apparatuses 105 and 106 are sequentially added.

Now, the information processing apparatuses may each transfer information exchanged with other information processing apparatuses in the bucket-brigade manner other than the autonomous mutual connection with nearby information processing apparatuses.

For example, the information processing apparatus 100 can directly communicate with each of the information processing apparatuses 101 to 103, but not with the information processing apparatuses 104 to 106 because of, for example, no coverage of radio waves.

Even in a case where the direct communication is impossible as mentioned above, the information processing apparatuses (the information processing apparatuses 101 to 103) capable of directly communicating with the information processing apparatus 100 can transfer data of the information processing apparatuses 100 to the information processing apparatuses 104 to 106. Accordingly, by transferring data in this manner, the information processing apparatus 100 can exchange information with the information processing apparatuses 104 and 105, which cannot directly communicate with the information processing apparatus 100, via any one of the information processing apparatuses 101 to 103.

This method of mutually transferring data (i.e., bucket brigade) to provide information to remote information processing apparatuses is called multihop relay. In addition, a network that performs multihop is commonly known as a mesh network.

Thus, Fig. 1 illustrates the example of the communication system 10 in which the devices interconnect autonomously with devices in the same network to collectively establish one network, just like the mesh network according to IEEE802.11s. There is no device that controls the entire system (e.g., base unit) in the communication system 10. In addition, each device in the communication system 10 checks a destination of data received by own device and, if the destination of the data is other than the own device, each device repeats data transfer in accordance with information of paths possessed by the own device, thus establishing communication with all devices on the network.

Now, it is assumed that a new device joins the existing network. For example, each device of the existing network is transmitting a signal indicating that the device has joined the network. This signal is, for example, a beacon of a wireless local area network (LAN) or a signal equivalent to such beacon.

Meanwhile, the device that tries to newly join the existing network scans the surroundings of the own device and receives the beacon to detect the presence of the existing network. Then, the new device starts connection protocol toward some devices included in the existing network that the new device has found by scanning, thus establishing a connection. Then, on the established connection, the new device executes a path selecting protocol to find a path to a device with which the new device tries to establish communication and starts exchanging data through the path.

### [Example of Functional Configuration of Information Processing Apparatus]

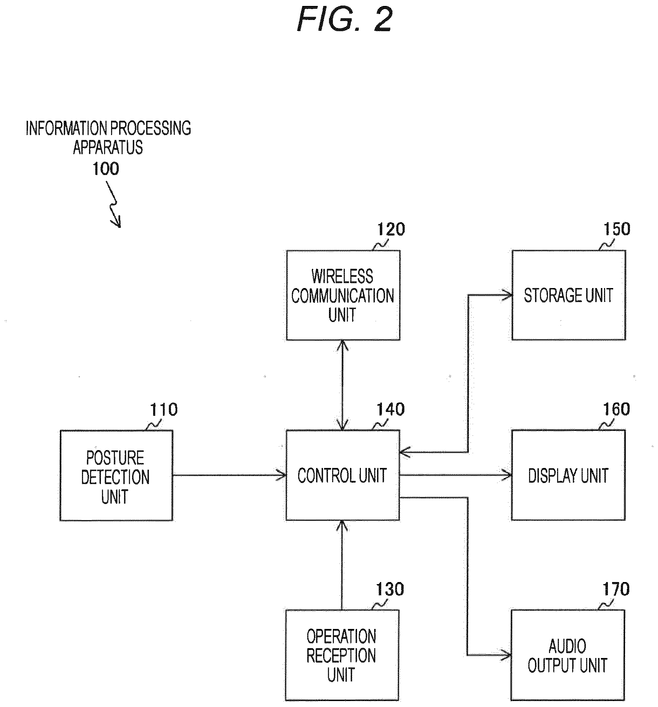

Fig. 2 is a block diagram illustrating an example of a functional configuration of the information processing apparatus 100 according to the embodiment of the present technology.

The information processing apparatus 100 includes a posture detection unit 110, a wireless communication unit 120, an operation receiving unit 130, a control unit 140, a storage unit 150, a display unit 160, and an audio output unit 170.

The posture detection unit 110 detects acceleration, movement, inclination, and so on of the information processing apparatus 100 to detect a change of posture of the information processing apparatus 100 (including movement of the information processing apparatus 100), and outputs information of the detected change regarding the change of posture to the control unit 140. It is noted that the posture detection unit 110 may be implemented by, for example, an acceleration sensor, a geomagnetic sensor, a gyro sensor, or a global positioning system (GPS) . For example, the posture detection unit 110 can use positional information (e.g., the longitude and latitude) detected with the GPS to determine a moving distance (e.g., moving distance per unit time period) and a moving direction of the information processing apparatus 100. The posture detection unit 110 can also determine the moving distance and the moving direction using, for example, the acceleration sensor. In addition, the posture detection unit 110 can determine the azimuth using, for example, the geomagnetic sensor.

The wireless communication unit 120 transmits and receives information to and from other information processing apparatuses (e.g., the information processing apparatuses 101 to 106) under the control of the control unit 140. As described above, the embodiment of the present technology illustrates communication example of the wireless communication unit 120 using the protocol according to IEEE802.11s.

However, the wireless communication unit 120 may perform wireless communication according to another wireless communication standard. For example, a wireless local area network (LAN) can be used. As the wireless LAN, Wi-Fi (e.g., IEEE802.11n), for example, can be used. Meanwhile, the wireless communication can be performed via wireless communication, such as near field communication (NFC), Bluetooth (registered trademark), visible light communication, infrared light, or radio wave for mobile phones. In addition, the wireless communication can be performed using, for example, millimeter-wave communication (e.g., 60 GHz), 900 MHz/2.4 GHz/5 GHz wireless LAN, or an ultra wide band (UWB).

It is noted that the wireless communication unit 120 may perform wireless communication using radio waves (electromagnetic waves), or using a medium other than the radio wave (e.g., wireless communication using a magnetic field) . In addition, the wireless communication unit 120 may have a function to connect to the public network, such as 3rd generation (3G) or Wi-Fi service areas.

For example, the wireless communication unit 120 exchanges a signal for generating or updating multihop communication paths under the control of the control unit 140, to perform wireless communication with other information processing apparatuses.

Thus, the wireless communication unit 120 establishes connection with a device included in the network in which a plurality of devices is mutually connected by one-by-one wireless communication among the plurality of devices, and exchanges information with the device.

The operation receiving unit 130 is an operation receiving unit that receives operation input by a user, and outputs operation information corresponding to the content of the received operation input to the control unit 140. The operation receiving unit 130 is implemented by, for example, a touch panel, a keyboard, or a mouse.

The control unit 140 controls individual parts of the information processing apparatus 100 in accordance with a control program stored in the storage unit 150. For example, the control unit 140 performs signal processing of the transmitted or received information. In addition, the control unit 140 is implemented by, for example, a central processing unit (CPU).

The storage unit 150 is a memory that stores various kinds of information. For example, the storage unit 150 stores information (e.g., a control program) necessary for the information processing apparatus 100 to perform a desired action.

For example, in the case of transmitting data using wireless communication, the control unit 140 processes information or the like that has been read from the storage unit 150 and generates a mass of data (transmission packet) that is actual data to be transmitted. Subsequently, the control unit 140 outputs the generated transmission packet to the wireless communication unit 120. In addition, the wireless communication unit 120 converts the transmission packet according to a format of a communication system suitable for actually transmitting the transmission packet, and transmits the converted transmission packet from an antenna (not illustrated).

Meanwhile, for example, in a case where the data is received using wireless communication, the wireless communication unit 120 performs signal processing by the receiver of the wireless communication unit 120 to extract a reception packet from the radio wave signal received via the antenna (not illustrated). Then, the control unit 140 interprets the extracted reception packet. As a result of interpreting, in a case where the packet is determined to be the data to be held, the control unit 140 writes the data in the storage unit 150. Meanwhile, in a case where the packet is determined to be the data to be transferred to other information processing apparatuses, the control unit 140 outputs the data to the wireless communication unit 120 as the transmission packet to be transferred to other information processing apparatuses.

The display unit 160 displays various kinds of information under the control of the control unit 140. It is noted that the display unit 160 can be implemented by, for example, an organic electroluminescence (EL) panel or a liquid crystal display (LCD) panel. It is noted that the operation receiving unit 130 and the display unit 160 can be implemented integrally as a touch panel on which a user can input operations by touching or bringing a finger close to the display surface.

The audio output unit 170 outputs various kinds of sound under the control of the control unit 140. It is noted that the audio output unit 170 is implemented by, for example, a speaker.

It is noted that, since other information processing apparatuses (information processing apparatuses 101 to 106) have similar functional configurations substantially identical to the functional configuration of the information processing apparatus 100, the description thereof will not be repeated. However, the constituent components, such as the storage unit 150, the display unit 160, and the audio output unit 170 may be different for each information processing apparatus depending on service to be used on the established network.

Now, the devices having the wireless communication function typically have an upper limit of the number of devices capable of maintaining wireless communication connection simultaneously. The upper limit number (connectable number) is set, for example, for each information processing apparatus. For example, the upper limit number is often set according to performance (e.g., memory capacity, encryption key) of the information processing apparatus. For example, a mobile device often has the connectable number of 8 to 10. In addition, for example, a device including a power source (e.g., an access point) often has the connectable number of about 64.

Now, it is assumed, for example, that a communication system establishes a network in which devices are directly connected with each other and, through such directly-connected devices, communication with a device that is not directly connected is available. In addition, it is assumed that, in such a communication system, all devices have established connections up to the upper limit number of connections. In this case, if a device (new device) trying to newly join the network appears, such a device cannot connect with any of other devices of the network, because all devices that have joined the network are using the upper limit number of connections. Therefore, the new device cannot join the network.

For example, in a case where a network, such as the mesh network that complies with IEEE802.11s is spread, it is also assumed that many devices would exist in a dense state. In such a case, it is assumed that, as mentioned above, a situation where the new device cannot join the network would occur.

In addition, it is assumed that, for example, a case where the communication is maintained by switching other devices that are directly connected due to movement would occur. In this case, it is also assumed that other devices to be directly connected at the destination would also use the upper limit number of connections. In such a case, the device cannot connect with any of other devices at the destination. Therefore, it would be impossible to establish communication at the destination.

Thus, it is assumed that the situation where the moving device cannot establish communication would occur in a case where the connection with and the disconnection from other devices that are directly connected with the moving device are repeated due to the movement. Meanwhile, although a high functional information processing apparatus, such as a smartphone, may exist as a device included in the network, a low functional and low power consumption device having a small number of simultaneously connectable devices, such as Internet of things (IoT), may also exist. Therefore, in a case where the devices such as the IoT are included in the network, it would not be possible to join the network due to incapability of connection with other devices, as mentioned above.

Accordingly, the embodiment of the present technology discloses an example of improving the connectivity to the network such that the device that is new or moving can appropriately join the network. Specifically, room for connection is left in each device belonging to the network so that the new or moving device can appropriately join the network.

### [Example of Leaving Room for Connection]

An example of leaving room for connection is described herein. For example, in a case of being connected already, it is possible to leave room for connection regardless of whether there is an existing connection or a new connection starts.

For example, it is assumed that the room for connection to be left (threshold of room for connection) is M, and the number of devices with which the connections are newly established is L (where 1 ≤ L ≤ M). In this case, the connections with L information processing apparatuses selected in some way among existing connections need to be cut such that the room for connection is M if the L devices are newly connected. It is noted that it may be possible to notify, in some way, the information processing apparatuses to be disconnected of the fact that the disconnection is performed for leaving the room for connection.

Meanwhile, to start a new connection, the room for connection can be left by connecting the devices whose number is simply calculated by subtracting the threshold M of the room for connection from the upper limit of the number of devices to be connected. In this case, the processing is simple, eliminating unnecessary connection and disconnection processing.

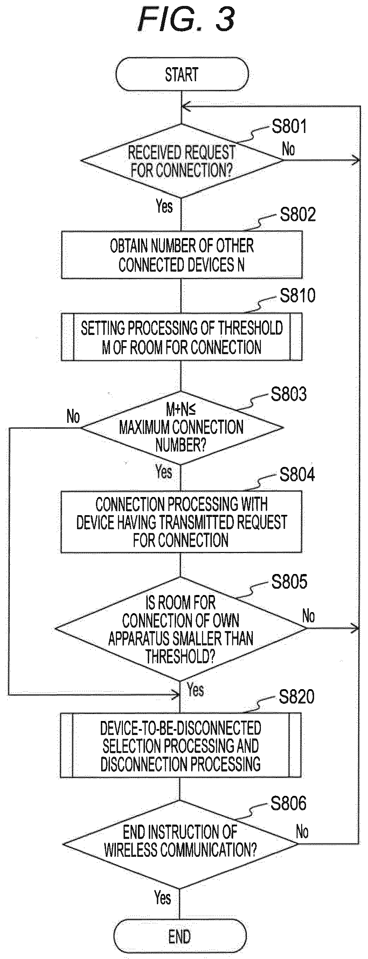

However, it would be better to establish connections up to the upper limit before determining the information processing apparatuses to be connected according to device-to-be-connected selection algorithm, so that the connections suitable for application can be achieved. It is noted that the example of leaving room for connection will be described in detail by referring to Fig. 3.

### [Example of Determining Device to be Disconnected]

Next, an example of determining a device to be disconnected is described. For example, a case where the information processing apparatus 100 determines one or more devices to be disconnected among a plurality of devices connected to the information processing apparatus 100 is given.

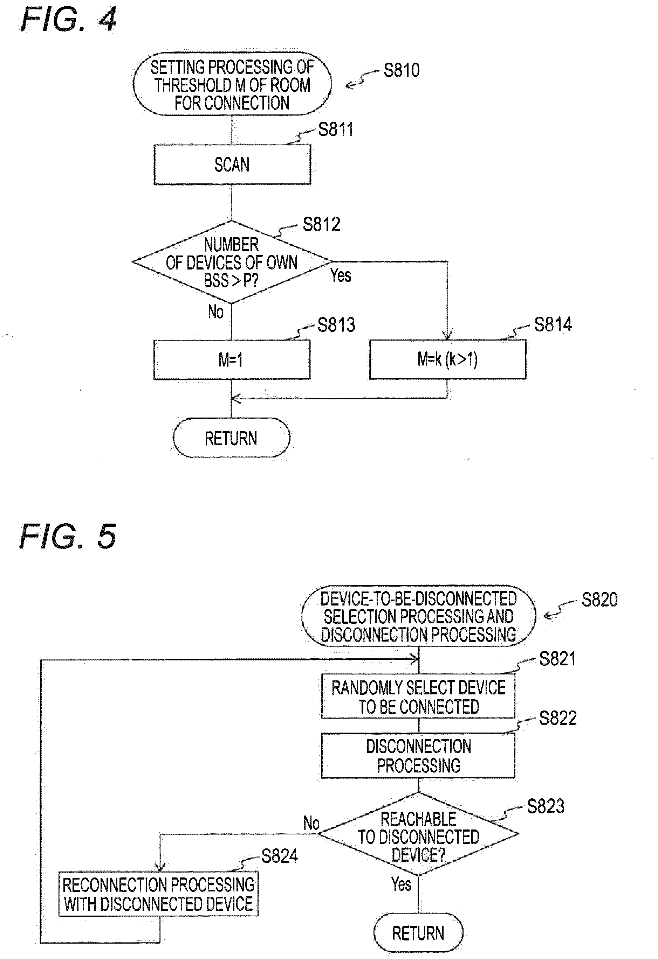

For example, the control unit 140 of the information processing apparatus 100 can randomly select one or more devices to be disconnected among the plurality of devices connected to the information processing apparatus 100. This example is illustrated in Fig. 5.

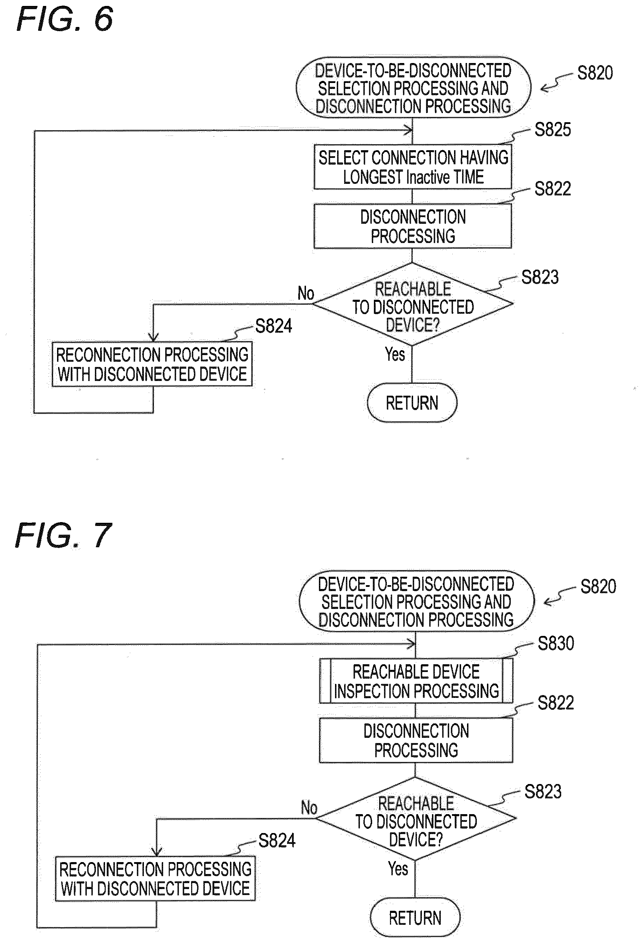

In addition, for example, the control unit 140 of the information processing apparatus 100 can select one or more devices to be disconnected in accordance with history of connection of the plurality of devices connected to the information processing apparatus 100. The history of connection is, for example, the time when the connection with the information processing apparatus 100 is established, or elapsed time after the connection with the information processing apparatus 100 is established. For example, the control unit 140 of the information processing apparatus 100 can select devices to be disconnected among the plurality of devices connected to the information processing apparatus 100 in descending order from the device having the longest elapsed time after the connection is established to the information processing apparatus 100 (that is, the device having the oldest history of connection). This example is illustrated in Fig. 6.

In addition, for example, the control unit 140 of the information processing apparatus 100 can select one or more devices to be disconnected in accordance with communication quality regarding the plurality of devices connected to the information processing apparatus 100. As the communication quality, a received signal strength indicator (RSSI), a congestion rate, or the like may be used.

An example using the RSSI as the communication quality is given herein.

For example, the control unit 140 of the information processing apparatus 100 can select the devices to be disconnected in descending order from the device having the strongest RSSI measured value among the RSSI measured for the plurality of devices connected to the information processing apparatus 100.

In addition, for example, the control unit 140 of the information processing apparatus 100 can select the devices to be disconnected in ascending order from the device having the weakest RSSI measured value among the RSSI measured for the plurality of devices connected to the information processing apparatus 100.

In addition, for example, the control unit 140 of the information processing apparatus 100 can select the devices to be disconnected in descending order from the device having the RSSI having the largest fluctuation in measured value among the RSSI measured for the plurality of devices connected to the information processing apparatus 100.

In addition, for example, the control unit 140 of the information processing apparatus 100 can select one or more devices to be disconnected in accordance with the communication paths regarding the devices connected to the information processing apparatus 100.

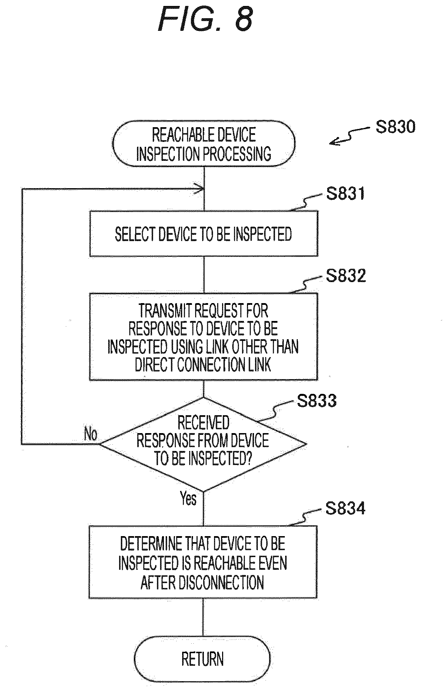

For example, the control unit 140 of the information processing apparatus 100 can select one or more devices to be disconnected according to whether the devices connected to the information processing apparatus 100 are used as paths to other devices that are not connected to the information processing apparatus 100. This example is illustrated in Figs. 7 and 8.

For example, the control unit 140 of the information processing apparatus 100 can select, as the device to be disconnected, the device that is not used as the path to other devices that are not connected to the information processing apparatus 100. In addition, the control unit 140 of the information processing apparatus 100 can select, as the device to be disconnected, the device that is least used as the path to other devices among devices used as the paths to other devices that are not connected to the information processing apparatus 100.

In addition, for example, the control unit 140 of the information processing apparatus 100 searches for the communication paths to other devices of the devices connected to the information processing apparatus 100. Then, in a case where there is no device that cannot be connected to the information processing apparatus 100 without passing through a particular device connected to the information processing apparatus 100, such a device can be selected as the device to be disconnected.

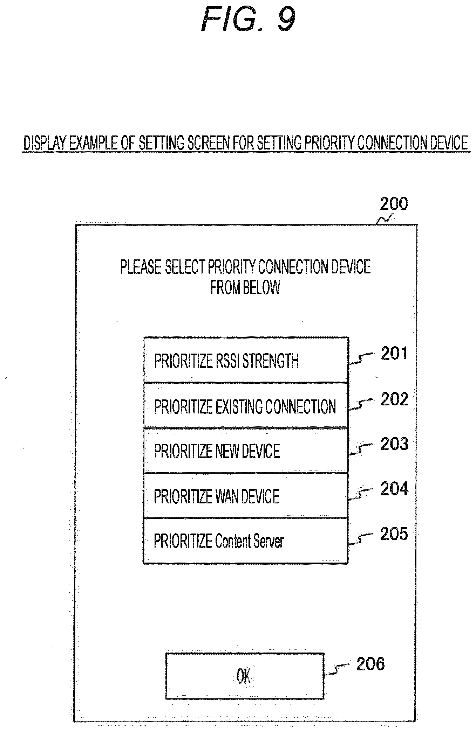

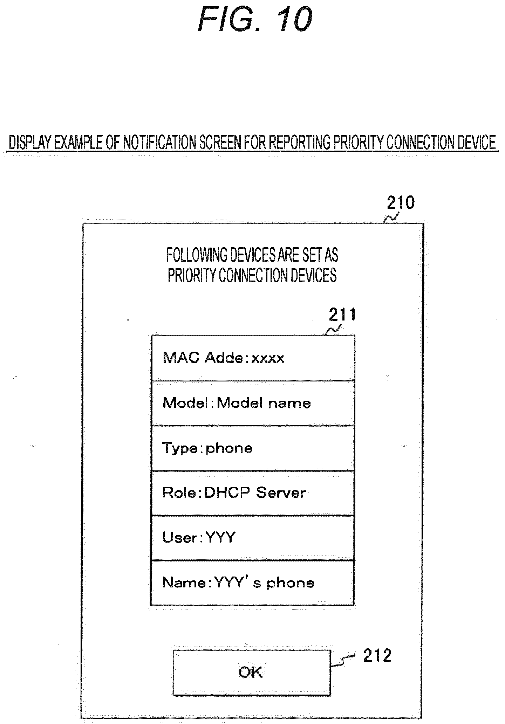

Now, for example, it is assumed that there is a device, among the devices that are directly connected to the information processing apparatus 100, whose direct connection should not be canceled for a reason other than a specified reason (e.g., degradation of communication environment) . For example, there is an application that does not allow disconnection of the device that is directly connected for a reason other than the degradation of communication environment. Therefore, it is possible to set a device which is prohibited for disconnection for leaving room for connection. For example, the device which is prohibited for disconnection for leaving room for connection can be automatically set by application or manually set by a user operation. A display example of a setting screen for such setting is illustrated in Fig. 9. In addition, a display example of a notifying screen for indicating the device having been set as described above is illustrated in Fig. 10.

### [Operation Example of Information Processing Apparatus]

Fig. 3 is a flowchart illustrating an example of processing procedure of communication processing by the information processing apparatus 100 according to the embodiment of the present technology.

First, the control unit 140 determines whether a request for connection is received from other devices (step S801) . In a case where no request for connection is received from other devices (step S801), monitoring continues.

In a case where the request for connection is received from other devices (step S801), the control unit 140 acquires the number N of other devices connected to the information processing apparatus 100 (step S802). Subsequently, the control unit 140 performs setting processing of a threshold M of room for connection (step S810) . The setting processing of the threshold M of the room for connection is described in detail by referring to Fig. 4.

Subsequently, the control unit 140 determines whether a sum of the number N of other devices connected to the information processing apparatus 100 and the threshold M of the room for connection is equal to or smaller than the maximum connectable number of the information processing apparatus 100 (step S803). In a case where the value of N + M exceeds the maximum connectable number of the information processing apparatus 100 (step S803), the process proceeds to step S820.

In a case where the value of N + M is not more than the maximum connectable number of the information processing apparatus 100 (step S803), the control unit 140 performs connection processing with the device that has sent the request for connection (step S804) . Subsequently, after the connection is established with the device that has sent the request for connection, the control unit 140 compares the room for connection of own apparatus (the information processing apparatus 100) with the threshold M of the room for connection to determine whether the room for connection of the own apparatus is smaller than the threshold M of the room for connection (step S805). Then, in a case where the room for connection of the own apparatus is not smaller than the threshold M of the room for connection (step S805), indicating no need to disconnect other devices connected, the process returns to step S801.

In a case where the room for connection of the own apparatus is smaller than the threshold M of the room for connection (step S805), the control unit 140 performs device-to-be-disconnected selection processing and disconnection processing (step S820). The device-to-be-disconnected selection processing and the disconnection processing are described in detail by referring to Figs. 5 to 7.

Subsequently, the control unit 140 determines whether a wireless-communication end instruction is issued (step S806) . Then, in a case where the wireless-communication end instruction is issued (step S806), the operation of the communication processing ends. Meanwhile, in a case where the end of the wireless communication is not instructed (step S806), the process returns to step S801. It is noted that the steps S801 to S805, S810, and S820 are examples of the control procedures recited in the appended claims.

### [Operation Example of Setting Processing of Threshold M of Room for Connection]

Fig. 4 is a flowchart illustrating an example of setting processing of the threshold M of the room for connection (processing procedure of step S810 of Fig. 3) of the communication processing performed by the information processing apparatus 100 according to the embodiment of the present technology.

For example, it is assumed herein that the number of other devices (upper limit number) that the information processing apparatus 100, which has been already connected to the network, can simultaneously connect is n. In this case, the information processing apparatus 100 cannot establish a new connection with a new device or execute a connection protocol, when the connection has been established with n devices.

Accordingly, in the embodiment of the present technology, the information processing apparatus 100 leaves room for connection of M (threshold M of room for connection) in order to establish connection with the new device that tries to connect to the network. M is an integer, where 1 ≤ M < n.

For example, the threshold M of the room for connection may be a fixed value (e.g., M = 1). In addition, for example, the threshold M of the room for connection may be a variable value. For example, the threshold M of the room for connection may be changed according to surrounding situations of the information processing apparatus 100. For example, the threshold M of the room for connection may be set in accordance with the congestion rate of the environment of the information processing apparatus 100.

For example, in a case where the environment of the information processing apparatus 100 is congested, the threshold M of the room for connection is set to a relatively large value (e.g., at least 2). Meanwhile, in a case where the environment of the information processing apparatus 100 is not congested, the threshold M of the room for connection is set to a relatively small value (e.g., 1).

Accordingly, Fig. 4 illustrates an example of setting the threshold M of the room for connection in accordance with the number of devices belonging to an own basic service set (BSS) It is assumed herein that the own BSS represents the BSS to which the own apparatus (or the device connected to the own apparatus) belongs. In addition, it is assumed that the devices belonging to the own BSS represent the device connected to the BSS to which the own apparatus (or the device connected to the own apparatus) belongs.

First, the control unit 140 scans surrounding devices to obtain the number of devices belonging to the own BSS (step S811). Subsequently, the control unit 140 compares the number of devices belonging to the own BSS with a threshold P to determine whether the number of devices belonging to the own BSS is larger than the threshold P (step S812).

In a case where the number of devices belonging to the own BSS is smaller than the threshold P (step S812), the control unit 140 sets the threshold M of the room for connection to 1 (step S813). In a case where the number of devices belonging to the own BSS is larger than the threshold P (step S812), the control unit 140 sets the threshold M of the room for connection to k (step S814). As used herein, k represents the threshold set for the congestion time and is, for example, an integer satisfying 1 < k < n (number (upper limit number) of simultaneously connectable devices of the information processing apparatus 100).

### [Operation Example of Device-to-be-Disconnected Selection Processing and Disconnection Processing]

Figs. 5 to 7 are flowcharts illustrating examples of the device-to-be-disconnected selection processing and the disconnection processing (the processing procedure of step S820 illustrated in Fig. 3) of the communication processing performed by the information processing apparatus 100 according to the embodiment of the present technology and examples. Fig. 5 illustrates an example of randomly selecting the device to be disconnected. Meanwhile, Fig. 6 illustrates an example of selecting the device to be disconnected in accordance with the duration of inactive time. Meanwhile, Fig. 7 illustrates an example of selecting the device to be disconnected according to whether the information processing apparatus 100 can directly connect to the device.

First, the description is given by referring to Fig. 5. The control unit 140 randomly selects the device to be disconnected among other devices connected to the information processing apparatus 100 (step S821). In this case, in a case where a plurality of devices is to be disconnected, all of the plurality of devices may be selected at once or the devices may be selected one by one.

Subsequently, the control unit 140 performs disconnection processing with respect to the selected device (step S822). Subsequently, the control unit 140 determines whether the information processing apparatus 100 is directly or indirectly connectable to the disconnected device (step S823) .

In a case where the information processing apparatus 100 is directly or indirectly connectable to the disconnected device (step S823), the operation of the device-to-be-disconnected selection processing and the disconnection processing end. In a case where, however, the number of devices to be disconnected has not been reached, each processing continues until the number is reached.

In a case where the information processing apparatus 100 is not directly or indirectly connectable to the disconnected device (step S823), communication is not established between the disconnected device and the information processing apparatus 100. Accordingly, the control unit 140 performs reconnection processing with the disconnected device (step S824), and the process returns to step S821. Then, the control unit 140 randomly selects the device to be disconnected (step S821) . In this case, it may be possible to exclude the devices that have already been selected from the selection.

Next, the description is given by referring to Fig. 6. It is noted that the same reference signs are given to portions commonly provided in Fig. 5, and the description thereof is not repeated.

First, the control unit 140 selects the device having the longest inactive time during connection among other devices connected to the information processing apparatus 100 as the device to be disconnected (step S825) . In this case, in a case where a plurality of devices is to be disconnected, all of the plurality of devices may be selected in descending order from the device having the longest inactive time, or the devices may be selected one by one.

Next, the description is given by referring to Fig. 7. It is noted that the same reference signs are given to portions commonly provided in Fig. 5, and the description thereof is not repeated.

First, the control unit 140 performs reachable device inspection processing (step S830). The reachable device inspection processing is described in detail below by referring to Fig. 8.

### [Operation Example of Reachable Device Inspection Processing]

Fig. 8 is a flowchart illustrating an example of reachable device inspection processing (processing procedure illustrated in step S830 of Fig. 7) of the communication processing by the information processing apparatus 100 according to the embodiment of the present technology.

First, the control unit 140 selects a device to be inspected (step S831). The device to be inspected may be selected by any one of the selection methods described above or selected by other methods.

Subsequently, the control unit 140 transmits a request for response to the device to be inspected using a link other than the direct connection link (step S832). Subsequently, the control unit 140 determines whether the response to the request for response is received from the device to be inspected to which the request for response has been transmitted (step S833) . In a case where the response to the request for response is not received from the device to be inspected, to which the request for response has been transmitted (e.g., a case where no response is received after a predetermined time interval has passed) (step S833), the process returns to step S831. Then, the control unit 140 selects another device as the device to be inspected (step S831) .

In a case where a response to the request for response is received from the device to be inspected, to which the request for response has been transmitted (step S833), the control unit 140 determines that the information can be exchanged between the information processing apparatus 100 and the device to be inspected even if the device to be inspected is disconnected. Then, the control unit 140 regards the device to be inspected as a device to be disconnected (step S834) . It is noted that, in a case where more than one device is to be disconnected, the above processing is repeated for the number of devices. In addition, the processing of step S823 of Fig. 7 may be eliminated, in order to determine whether the information can be exchanged between the information processing apparatus 100 and the device to be inspected.

Thus, the control unit 140 of the information processing apparatus 100 can control such that the wireless communication unit 120 connects the number of devices smaller than the upper limit number of devices that are directly connectable by the wireless communication unit 120 simultaneously in the network (e.g., mesh network). For example, the control unit 140 can cause the wireless communication unit 120 to connect the number of devices smaller than the upper limit number by one. In addition, for example, the control unit 140 can disconnect a predetermined number of devices from the connected devices, in a case where the upper limit number of devices are connected to the wireless communication unit 120. In this case, the control unit 140 can select the device, as the device to be disconnected, other than the devices that would be disconnected from the network if the connection with the wireless communication unit 120 is cut.

In addition, for example, the control unit 140 can disconnect a predetermined number of devices among the devices connected to the information processing apparatus 100, in a case where a new device is connected to the network so that the upper limit number of devices are connected to the wireless communication unit 120.

In addition, for example, the control unit 140 can disconnect a predetermined number of devices among the devices connected to the information processing apparatus 100, in a case where the request for connection to join the network is received so that the upper limit number of devices are connected to the wireless communication unit 120.

### [Example of Setting Priority Connection Device]

Examples of selecting devices to be disconnected by various methods have been described above. It is also expected herein that there may be a device to which the user desires to give priority for connection instead of the device to be disconnected. Accordingly, an example of setting the device to be prioritized for connection (priority connection device) is described below.

### [Display Example of Setting Screen for Setting Priority Connection Device]

Fig. 9 illustrates a display example of a setting screen 200 for setting a priority connection device by the information processing apparatus 100. The setting screen 200 is displayed on the display unit 160 under control of the control unit 140.

The setting screen 200 is a setting screen for setting a priority connection device by user operation. The setting screen 200 includes a priority-connection-device selection buttons 201 to 205 and an OK button 206.

The priority-connection-device selection buttons 201 to 205 are buttons for selecting a device that the user desires as a priority connection device. In this example, a priority connection device is selected according to the classifications, such as the RSSI strength, existing connections, and the new device. However, icons representing the device connected to the information processing apparatus 100 may be displayed so that the user can directly select a desired device.

The OK button 206 is a button to be pressed to fix the user operation using the priority-connection-device selection buttons 201 to 205.

Thus, in a case where the OK button 206 is pressed following any one of the priority-connection-device selection buttons 201 to 205 is pressed, the control unit 140 sets the device corresponding to the pressed priority-connection-device selection button as the priority connection device.

### [Display Example of Notifying Screen for Reporting Priority Connection Device]

Fig. 10 illustrates a display example of a notifying screen 210 for notifying each device of a priority connection device set by the information processing apparatus 100. The notifying screen 210 is displayed on the display unit 160 in accordance with the control of the control unit 140.

The notifying screen 210 is a display screen for indicating the priority connection device set by the user operation or automatically. The notifying screen 210 includes a display region 211 for priority connection device information and an OK button 212.

It is noted that the display region 211 for the priority connection device information illustrated in Fig. 10 is only an example, and it is possible to display a portion of the display region 211 or display other information.

The OK button 212 is pressed by the user upon confirmation of the display region 211 for the priority connection device information.

### [Notification Example of Room for Connection]

Next, an example of notifying other devices of presence or absence of the room for connection is given. Herein, an example of notifying other devices of the information of the room for connection (information of room for connection) by the information processing apparatus 100 is illustrated.

For example, the control unit 140 of the information processing apparatus 100 can report the information about the room for connection (information of room for connection) using a wireless packet (e.g., a Wi-Fi beacon) that is broadcast regularly. Similarly, other devices can notify the information processing apparatus 100 of the information about the room for connection (information of room for connection) using broadcast or the like.

For example, in a case where the Wi-Fi beacon is used as the wireless packet, a special information element (IE) is provided in the Wi-Fi beacon to store the information about the room for connection (information of room for connection) in the special IE. As the information about the room for connection, for example, the maximum connectable number (upper limit) and the current number of connections, or binary information indicating presence or absence of the room for connection can be stored.

Thus, the control unit 140 can exchange the information of room for connection regarding the number of other devices connectable to the device constituting the network, and provides the information of room for connection to the device that newly tries to join the network. In this case, the device newly joining the network can select the device to be newly connected in accordance with the information of room for connection. For example, the device newly joining the network can select a device for which the room for connection is provided as a newly connecting device in accordance with the information of room for connection.

### [Communication Example of Moving Information Processing Apparatus]

Next, a communication example of a moving information processing apparatus is described. For example, in a case where the information processing apparatus is a portable information processing apparatus (e.g., smartphone or tablet terminal), it is expected that the user possessing such an information processing apparatus also moves. Thus, in a case where the information processing apparatus is moving along with the movement of the user, it is necessary to switch destinations of connection, according to the movement of the information processing apparatus, to maintain connection to the network. Accordingly, in this embodiment, a communication example in which the destinations of connection are switched according to the movement of the information processing apparatus is described.

### [Example of Determining Device to be Disconnected During Movement]

In a case where the information processing apparatus moves, the devices existing in the surroundings of the moving information processing apparatus change. Accordingly, the moving information processing apparatus needs to switch the device to be connected and the device to be disconnected according to the change of the surrounding devices. For example, the moving information processing apparatus disconnects a device that is located at a far distance (e.g. , a device to which the signal (e.g., beacon) cannot reach). In addition, the moving information processing apparatus establishes connection with the device that transmits a signal (e.g., beacon) indicating the presence of a new device.

Thus, the moving information processing apparatus disconnects the device that cannot communicate after the move, and establishes connection with the device that becomes newly connectable after the move. Accordingly, it is necessary to select and disconnect the device that cannot communicate after the move. To select the device, a selection method based on communication quality or a distance from the device, or a selection method using other communication method can be adopted.

For example, the RSSI can be used as the communication quality. For example, the control unit 140 of the information processing apparatus 100 can select the device to be disconnected among the devices connected to the information processing apparatus 100 in accordance with measured RSSI.

For example, the control unit 140 of the information processing apparatus 100 can select the device whose measured RSSI is degrading as the device to be disconnected. Meanwhile, for example, the control unit 140 of the information processing apparatus 100 can select the device whose measured RSSI fluctuates largely and whose RSSI is unstable as the device to be disconnected.

In addition, for example, sensor information, a compass, an acceleration sensor, and positional information can be used other than the RSSI. For example, in accordance with at least one of the above information items, the control unit 140 of the information processing apparatus 100 calculates the distance between the devices connected to the information processing apparatus 100 and the information processing apparatus 100. Then, in a case where a device having the calculated distance larger than the threshold is detected, the control unit 140 of the information processing apparatus 100 selects the device as the device to be disconnected.

Meanwhile, for example, it is possible to use another communication method (second communication method) which is different from the communication method (first communication method) used for the data communication with the devices joining the network. The second communication method can use a communication method using a communication range narrower than the communication range allowed for the first communication method. For example, a communication protocol, such as Bluetooth (registered trademark) or near field communication (NFC), can be used.

For example, in a case where the information processing apparatus 100 is unable to communicate with other devices by the second communication method, it would be possible that the communication is also disabled by data communication of the first communication method that uses a wider communication range than the second communication method. In other words, the information processing apparatus 100 recognizes the device that becomes unable to communicate by the second communication method, thus predicting which device would become disabled to communicate by the first communication method.

In addition, for example, the control unit 140 of the information processing apparatus 100 determines whether communication is available with other devices using these communication protocols. Then, the control unit 140 of the information processing apparatus 100 detects the device that is disabled to communicate by the second communication method. Then, the control unit 140 of the information processing apparatus 100 selects the device, in a case of being detected as the device disabled to communicate by the second communication method, as a device to be disconnected.

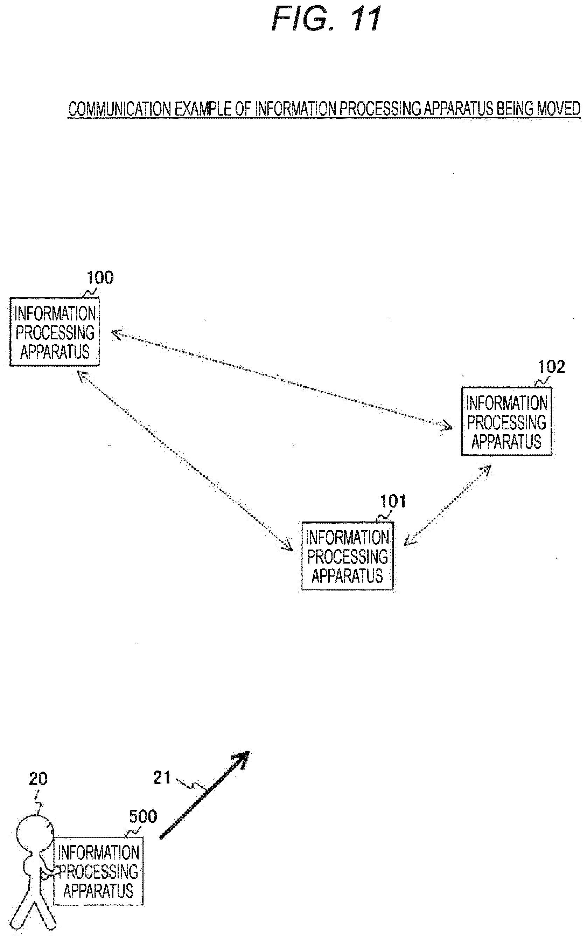

Figs. 11 to 14 are examples of transition of connection with other devices in a case where the information processing apparatus 500 moves according to the embodiment of the present technology. Figs. 11 to 14 illustrate examples in which the maximum connection number of the information processing apparatuses 100 to 102 is 3 and the threshold M of the room for connection is 1. In addition, the information processing apparatuses 101 and 102 are located at a relatively close distance from each other, the information processing apparatuses 100 and 101 are located at a relatively long distance from each other, and the information processing apparatuses 100 and 102 are located at a relatively long distance from each other. In addition, the information processing apparatuses 100 to 102 prioritize connection with nearby devices. In addition, the description herein is given by referring to Fig. 3.

Fig. 11 illustrates an example in which a user 20 possessing the information processing apparatus 500 is moving in a direction of the information processing apparatuses 100 to 102 (direction indicated by an arrow 21) included in the network. In the example of Fig. 11, it is illustrated that the information processing apparatus 500 is far from the information processing apparatuses 100 to 102, so that no signal is received between the information processing apparatus 500 and each of the information processing apparatuses 100 to 102.

In this case, the information processing apparatuses 100 to 102 do not receive a request for connection from the information processing apparatus 500 (step S801), and monitoring continues.

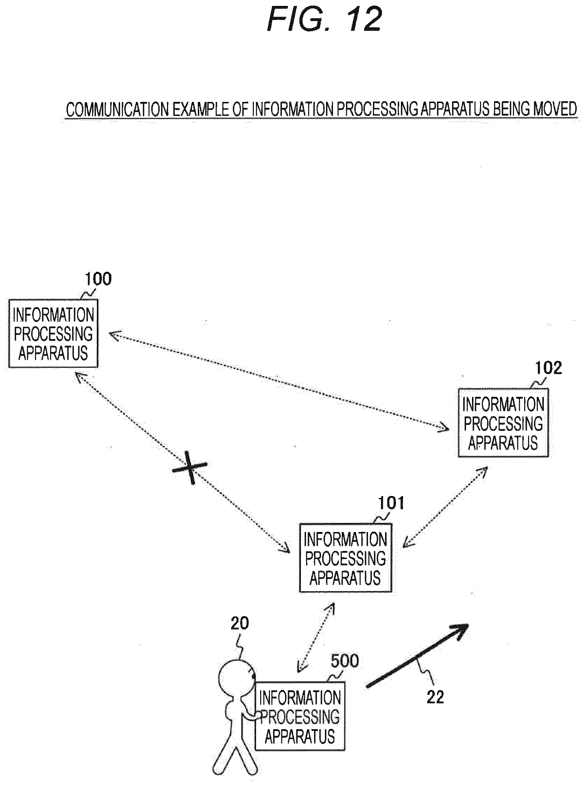

Fig. 12 illustrates an example in which the user 20 possessing the information processing apparatus 500 moves closer to the information processing apparatuses 100 to 102 included in the network, and further moves in a direction of an arrow 22. In the example of Fig. 12, it is illustrated that the information processing apparatus 500 is close to the information processing apparatus 101, so that the information processing apparatuses 500 and 101 can receive a signal from each other.

In this case, the information processing apparatus 101 receives a request for connection from the information processing apparatus 500 (step S801), so that the number N indicating the number of devices connected is obtained (step S802) . In the example of Fig. 12, the information processing apparatus 101 is connected with the information processing apparatuses 100 and 102, so that 2 is obtained as the number N of other connected devices.

Subsequently, the information processing apparatus 101 obtains the threshold M of the room for connection (step S810) . In the example of Fig. 12, the threshold M of the room for connection obtained is 1.

Subsequently, the information processing apparatus 101 determines whether M + N ≤ maximum connection number (step S803) . In this example, M + N = 3 and the maximum connection number is 3, so that M + N = maximum connection number (step S803). Therefore, the information processing apparatus 101 performs connection processing with the information processing apparatus 500 (step S804).

Subsequently, since the room for connection (0) of its own apparatus is less than the threshold M (1) of the room for connection (step S805), the information processing apparatus 101 performs device-to-be-disconnected selection processing and disconnection processing (step S820). In this case, the information processing apparatus 101 selects the information processing apparatus 100 which is located farthest from the information processing apparatus 101 as the device to be disconnected, and performs disconnection processing with the information processing apparatus 100 (step S820).

In addition, the information processing apparatus 500 receives the request for connection from the information processing apparatus 101 (step S801), thus obtaining the number N (0) of other devices connected (step S802). Subsequently, the information processing apparatus 500 obtains the threshold M (1) of the room for connection (step S810).

Subsequently, the information processing apparatus 500 determines whether M + N ≤ maximum connection number (step S803) . In this example, M + N = 1 and the maximum connection number is 3, so that M + N < maximum connection number (step S803). Therefore, the information processing apparatus 500 performs the connection processing with the information processing apparatus 101 (step S804).

Subsequently, the information processing apparatus 500 returns to step S801, because the room for connection (2) of the own apparatus is not smaller than the threshold M (1) (step S805).

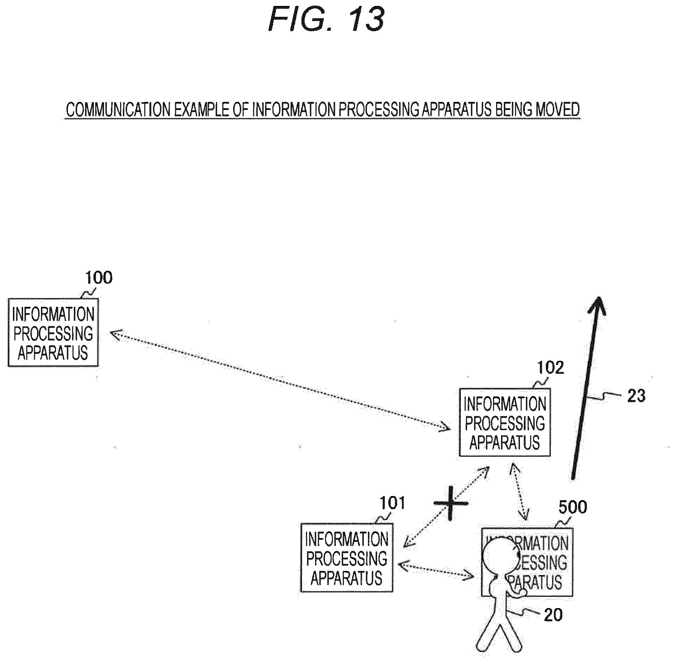

Fig. 13 illustrates the example in which the user 20 possessing the information processing apparatus 500 moves closer to the information processing apparatus 102 and continues moving in a direction of an arrow 23. In the example of Fig. 13, the information processing apparatuses 500, 101, and 102 can receive a signal mutually, as the information processing apparatuses 500 is close to both the information processing apparatuses 101 and 102.

In this case, the information processing apparatus 102 receives the request for connection from the information processing apparatus 500 (step S801), and obtains the number N of other connected devices (step S802) . In the example of Fig. 13, the information processing apparatus 102 obtains 2 as the number N of other connected devices, because the information processing apparatus 102 is connected with both the information processing apparatus 100 and 101.

Subsequently, the information processing apparatus 102 obtains the threshold M of the room for connection (step S810) . In the example of Fig. 12, the threshold M of the room for connection obtained is 1.

Subsequently, the information processing apparatus 102 determines whether M + N ≤ maximum connection number (step S803) . In this example, M + N = 3 and the maximum connection number is 3, so that M + N = maximum connection number (step S803). Therefore, the information processing apparatus 102 performs the connection processing with the information processing apparatus 500 (step S804).

Subsequently, since the threshold M (1) is smaller than the room for connection (0) of the own apparatus (step S805), the information processing apparatus 102 performs the device-to-be-disconnected selection processing and the disconnection processing (step S820). In this case, the information processing apparatus 102 selects the information processing apparatus 100 which is located farthest from the information processing apparatus 102 as the device to be disconnected. However, once the connection between the information processing apparatuses 102 and 100 is disconnected, the information processing apparatus 100 cannot communicate with any device. Accordingly, the information processing apparatus 102 selects the information processing apparatus 101 as the device to be disconnected and performs the disconnection processing with the information processing apparatus 101 (step S820).

In addition, the information processing apparatus 500 receives the request for connection from the information processing apparatus 102 (step S801), and obtains the number N (1) of other connected devices (step S802) . Subsequently, the information processing apparatus 500 obtains the threshold M (1) of the room for connection (step S810).

Subsequently, the information processing apparatus 500 determines whether M + N ≤ maximum connection number (step S803). In this example, M + N = 2 and the maximum connection number is 3, so that M + N < maximum connection number (step S803). Therefore, the information processing apparatus 500 performs the connection processing with the information processing apparatus 102 (step S804).

Subsequently, the information processing apparatus 500 returns to the step S801, because the room for connection (1) of the own apparatus is not smaller than the threshold M (1) of the room for connection (step S805).

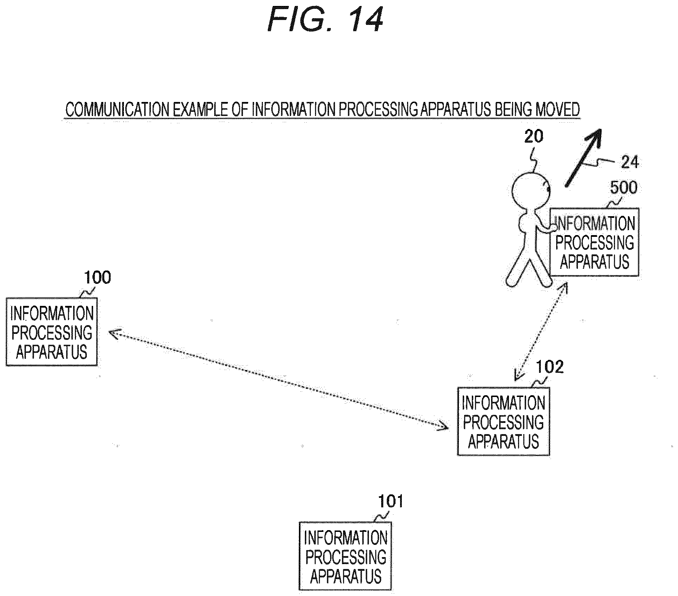

Fig. 14 illustrates the example in which the user 20 possessing the information processing apparatus 500 is moving in a direction away from the information processing apparatus 102 (direction of an arrow 24). In the example of Fig. 14, it is illustrated that the information processing apparatuses 500 and 102 are close to each other, and can mutually receive a signal. In addition, in the example of Fig. 14, it is illustrated that the information processing apparatuses 500 and 101 are far from each other, and cannot mutually receive a signal.

In this case, the communication between the information processing apparatuses 500 and 101 is disconnected.

In addition, the information processing apparatus 101 receives the request for connection from the information processing apparatus 100 (step S801), and obtains the number N of other connected devices (step S802). In the example of Fig. 14, the information processing apparatus 101 is not connected to any device, thus receiving 0 as the number N of other connected devices.

Subsequently, the information processing apparatus 101 obtains the threshold M of the room for connection (step S810) . In the example of Fig. 14, the threshold M of 1 is obtained as the threshold of the room for connection.

Subsequently, the information processing apparatus 101 determines whether M + N ≤ maximum connection number (step S803) . In this example, M + N = 1 and the maximum connection number is 3, so that M + N < maximum connection number (step S803). Therefore, the information processing apparatus 101 performs the connection processing with the information processing apparatus 100 (step S804).

Subsequently, the information processing apparatus 101 returns to step S801, as the room for connection (2) of the own apparatus is not smaller than the threshold M (1) of the room for connection (step S805). Thus, the information processing apparatuses 100 and 101 are reconnected as the information processing apparatus 500 moves.

### [Example of Request for Leaving Room for Connection]

It is also assumed herein that the device belonging to the network to which the connection is desired may have no room for connection. In this case, it may be possible for the information processing apparatus that desires connection to request for leaving room for connection to the device belonging to the network to which the connection is desired.

In addition, it is also assumed that, although the moving information processing apparatus is supposed to connect to the device that exists in the surroundings of the information processing apparatus after the move, such a device in the surroundings may not have room for connection. In this case, similarly, it may be possible for the moving information processing apparatus to request for leaving room for connection to the device to which the connection is desired.

Thus, it is assumed that in a case where the information processing apparatus is moving, the information processing apparatus may be connected to another device before connecting to a new device after the move (before the move (or during the move)) . Thus, in a case where the information processing apparatus is moving and has been connected to other devices before the move, it may be possible to request (ask), in advance, the device to which the connection is desired to leave the room for connection via the connected network.

### [Example of Request for Room for Connection]

The request for the room for connection may be performed by transmitting an action frame. In addition, for example, it may also be possible to simply transmit the request for connection and, in a case where there is no room for connection in the device that receives it, automatically issue the request for the room for connection.

In addition, for example, the request for the room for connection can be transmitted to the device to which connection is desired by unicast. However, the request for room for connection may be transmitted at first to the devices belonging to all networks that can be observed by unicast in order to join the network. In addition, for example, the presence of the request for room for connection may be reported by broadcast.

### [Reception and Processing of Request for Room for Connection]

The device that has received the request for the room for connection determines the device to be disconnected from the connected devices using a device-to-be-disconnected selection algorithm, and performs disconnection processing. In this case, it may be possible to notify the device to be disconnected of the fact that the disconnection is caused by receiving the request for room for connection from a new device.

Meanwhile, in a case where the leaving for room for connection is achieved, the device having received the request for room for connection may report that the room for connection has been left by broadcast (e.g., a beacon). In addition, the report may be in the form of a response to the request for room for connection. Alternatively, the request for connection may be transmitted regularly.

In addition, in a case where the device to be disconnected is not selected (e.g., all devices are in communication), a rejection may be returned to the request for room for connection. Thus, a rejecting method to return a rejection to the request for room for connection can be performed by, for example, simple time-out, a response to the request, or reporting with a beacon or the like.

Meanwhile, in a case where the devices connected to the own apparatus directly change due to the move of the information processing apparatus, the control unit of the information processing apparatus can obtain, after the change, the information of room for connection regarding the number of other devices connectable to the device to be connected directly from the device included in the network. For example, the information can be obtained from other devices directly or via one or more devices.

In addition, the control unit of the moving information processing apparatus can select the device to be directly connected after the change, in accordance with the information of room for connection. In this case, in a case where there is no device capable of direct connection after the change, the control unit of the moving information processing apparatus maintains connection with the devices having been already connected until the device that can be directly connected after the change can be obtained. However, if the connection with the device that is already connected is disconnected from the network before the device that can be directly connected after the change is obtained, the control unit of the information processing apparatus reports this fact. For example, the fact can be indicated to the user by displaying or audio output.

Meanwhile, the control unit of the moving information processing apparatus can control for reporting the position or direction in which the device that can be connected directly after the change is present. For example, this can be indicated by displaying a sign (e.g., an arrow icon) indicating the position or direction in which the device that can be connected directly after the change is present, or by audio output of a message indicating such a position or direction. For example, it is possible to estimate the position or direction in which the device that can be connected directly after the change is present using a radio field strength of radio waves. For example, in a case where the move is detected in a direction of higher radio field strength, the direction is regarded as an estimated direction in which the device that can be directly connected after the change is present. In addition, for example, it may be possible to calculate a distance to the device that can be directly connected after the change according to the radio field strength, and display the calculated distance (or direction and position). The distance may be indicated by, for example, numbers, or may also be indicated by a length, a color, or the like of the arrow.

### [Example of Expanding Number of Connectable Devices by Time Division of Connection Capacity]

In the above, the example of leaving room for connection in accordance with the number of connectable devices for each device has been described. Now, the number of connectable devices can be expanded by time division of the connection capacity of each device. This can improve connectivity of each device. Accordingly, an example of expanding the number of connectable devices by time division of the connection capacity is described below.

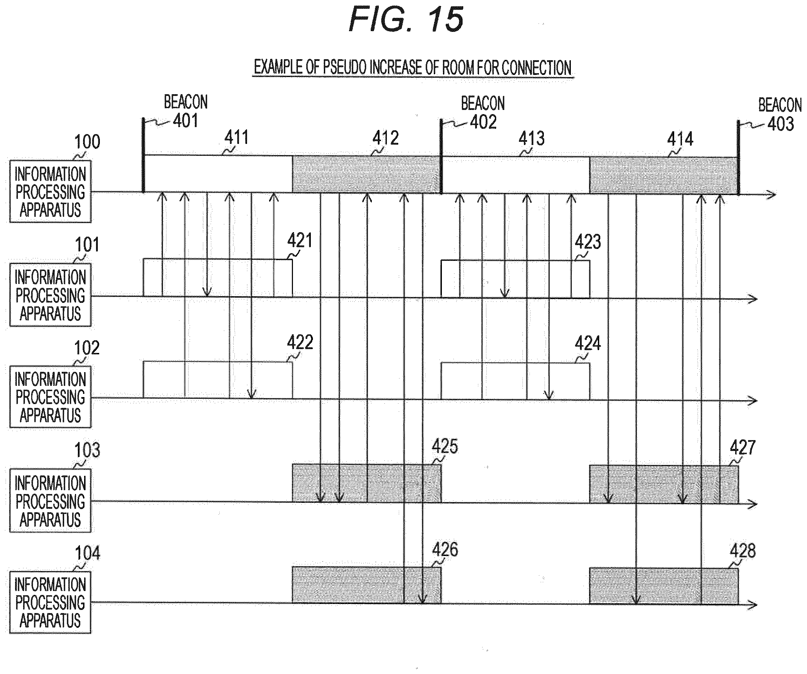

Fig. 15 schematically illustrates an example of time division processing of connection capacity of the information processing apparatus 100 according to the embodiment of the present technology. The example of Fig. 15 illustrates a case where the information processing apparatus 100 communicates with the information processing apparatuses 101 to 104.

It is possible herein to use a system, such as a Notice-of-Absence used in the Wi-Fi Direct or the like, as a method for dividing the connection capacity in a time-division manner.

Specifically, unit time (e.g., 1 beacon interval) is divided into some slots. For example, as illustrated in Fig. 15, an interval between beacons 401 and 402 is divided into two slots 411 and 412 (indicated by rectangles), and an interval between beacons 402 and 403 is divided into two slots 413 and 414 (indicated by rectangles). Then, each slot is allocated to each information processing apparatus.

For example, the slots 411 and 413 are allocated to the information processing apparatuses 101 and 102, respectively. In addition, for example, the slots 412 and 414 are allocated to the information processing apparatuses 103 and 104, respectively. Thus, the information processing apparatus 100 notifies each information processing apparatus of communicable time which is allocated to each information processing apparatus using the Notice-of-Absence or the like. Accordingly, the information processing apparatus 100 can notify each of the connected information processing apparatuses of the communicable timing. In Fig. 15, the communicable time of the information processing apparatuses 101 and 102 is indicated by rectangles 421 to 424, respectively. In addition, the communicable time of the information processing apparatuses 103 and 104 is indicated by rectangles 425 to 428, respectively.

In addition, the information processing apparatus 100, after having reported the communicable timing, transmits information to the information processing apparatuses 101 to 104 at timing defined by the allocated slots. In addition, the information processing apparatuses 101 to 104 to which the communicable timing is reported try to transmit frames to the information processing apparatus 100 during the communicable time.

This limits the number of communicating information processing apparatuses for each slot. Thus, the number of connectable devices can virtually expand, with the capacity of the connectable devices of the own apparatus being unchanged, to improve the connectivity.

Thus, the control unit 140 of the information processing apparatus 100 can control such that the wireless communication unit 120 can switch the devices directly connected simultaneously in the time-division manner.

Thus, according to the embodiment of the present technology, it is possible to improve the connectivity of the information processing apparatuses to the network. The network includes, for example, a network (e.g., an autonomous distributed network) in which nearby information processing apparatuses can connect each other directly and are connectable to other information processing apparatuses via the directly-connected information processing apparatuses.

For example, it is possible to avoid such an incident that a new and direct connection of the information processing apparatuses is prohibited, or a new information processing apparatus cannot be connected to the network. In addition, it is possible to prevent no connection with the network at the destination of the moving information processing apparatus.

Thus, it is possible for the new information processing apparatus to smoothly join the network in which the information processing apparatuses are densely provided, and smoothly switch the connection of the moving information processing apparatus.

In addition, the new information processing apparatus can be connected at high speed by previously leaving room for connection, so that smooth switching of the communication path can be achieved during movement.

In addition, the use of the device-to-be-disconnected selection algorithm allows positively cutting connections with distant information processing apparatuses, while connecting near information processing apparatuses, so that the communication path passing through the near information processing apparatus can be used. This improves use efficiency of the entire network and increases communication speed of the own apparatus.

### <2. Application Examples>

The technology according to the present disclosure is applicable to various products. For example, the information processing apparatuses 100 to 106 and 500 may be implemented as mobile terminals, such as smartphones, tablet personal computers (PCs), notebook PCs, mobile game terminals, or digital cameras, fixed terminals, such as television receivers, printers, digital scanners, or network storage, or vehicle-mounted terminals, such as car navigation apparatus. In addition, the information processing apparatuses 100 to 106 and 500 may be implemented as terminals (also referred to as machine type communication (MTC) terminals) that perform machine-to-machine (M2M) communication, such as a smart meter, a vending machine, a remote monitoring device, and point of sale (POS) terminals. Further, the information processing apparatuses 100 to 106 and 500 may be wireless communication modules (e.g., integrated circuit modules each fabricated with a single die) mounted on any of the above-mentioned terminals.

### [2-1. First Application Example]

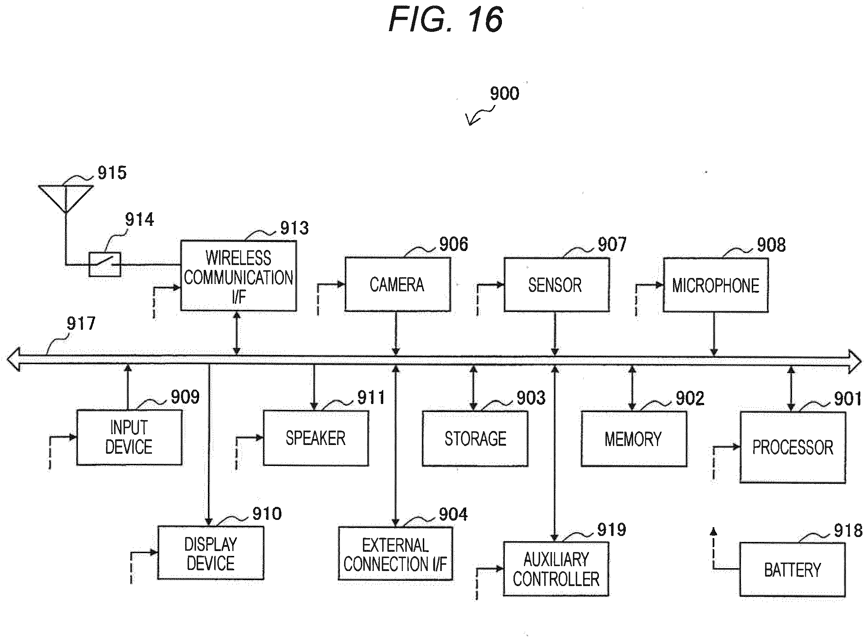

Fig. 16 is a block diagram schematically illustrating a configuration example of a smartphone 900 to which the technology according to the present disclosure is applicable. The smartphone 900 includes a processor 901, a memory 902, a storage 903, an external connection interface 904, a camera 906, a sensor 907, a microphone 908, an input device 909, a display device 910, a speaker 911, a wireless communication interface 913, an antenna switch 914, an antenna 915, a bus 917, a battery 918, and an auxiliary controller 919.

The processor 901 may be a central processing unit (CPU) or a system on chip (SoC) that controls functions of the application layer and other layers of the smartphone 900. The memory 902 includes a random access memory (RAM) and a read only memory (ROM), and stores programs and data that are executed by the processor 901. The storage 903 may include a storage medium, such as a semiconductor memory or a hard disk. The external connection interface 904 is an interface for connecting an external device, such as a memory card or a universal serial bus (USB) device, to the smartphone 900.

The camera 906 includes, for example, an imaging device, such as a charge coupled device (CCD) or a complementary metal oxide semiconductor (CMOS), and generates a picked-up image. The sensor 907 may include sensors including a positioning sensor, a gyro sensor, a geomagnetic sensor, or an acceleration sensor. The microphone 908 converts audio input to the smartphone 900 into an audio signal. The input device 909 includes, for example, a touch sensor, a keypad, a keyboard, a button, a switch, or the like that detects touching on the screen of the display device 910, and receives operations or information input by users. The display device 910 includes a screen, such as a liquid crystal display (LCD) or an organic light emitting diode (OLED), and displays an output image of the smartphone 900. The speaker 911 converts the audio signal output from the smartphone 900 into audio.

The wireless communication interface 913 supports one or more wireless LAN standards among, for example, IEEE802.11a, 11b, 11g, 11n, 11ac, and 11ad, and executes wireless communication. The wireless communication interface 913 may communicate with other apparatuses via wireless LAN access points in an infrastructure mode. In addition, the wireless communication interface 913 may directly communicate with other apparatuses in a direct communication mode, such as an ad hoc mode or the Wi-Fi Direct. It is noted that, in the Wi-Fi Direct, one of two terminals operates as an access point, unlike the ad hoc mode, and the communication is directly performed between those terminals. The wireless communication interface 913 may typically include a base band processor, a radio frequency (RF) circuit, and a power amplifier. The wireless communication interface 913 may be a one-chip module integrating a memory storing a communication control program, a processor for executing such a program, and related circuits. In addition to the wireless LAN system, the wireless communication interface 913 may support other communication systems, such as a near-field communication system, a proximal wireless communication system, or a cellular communication system. The antenna switch 914 switches destinations of the connection of the antenna 915 among a plurality of circuits (e.g., circuits for different wireless communication systems) included in the wireless communication interface 913. The antenna 915 includes one or a plurality of antenna elements (e.g., a plurality of antenna elements constituting a multiple-input and multiple-output (MIMO) antenna), and is used for transmitting and receiving the wireless signal by the wireless communication interface 913.

It is noted that, without limiting to the example of Fig. 16, the smartphone 900 may include a plurality of antennas (e.g., an antenna for the wireless LAN, an antenna for the proximal wireless communication system, and so on) . In this case, the antenna switch 914 may be eliminated from the configuration of the smartphone 900.

The bus 917 mutually connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919. The battery 918 supplies power to each block of the smartphone 900 illustrated in Fig. 16 via a power feed line which is partially indicated in a broken line in the drawing. The auxiliary controller 919 operates the least necessary functions of the smartphone 900 during a sleep mode.

In the smartphone 900 illustrated in Fig. 16, the control unit 140, which has been described by referring to Fig. 2, may be implemented in the wireless communication interface 913. In addition, at least part of these functions may be implemented in the processor 901 or the auxiliary controller 919.

It is noted that the smartphone 900 may operate as a wireless access point (software application (AP)) by the processor 901 executing the access point function in the application level. In addition, the wireless communication interface 913 may include the wireless access point function.

### [2-2. Second Application Example]

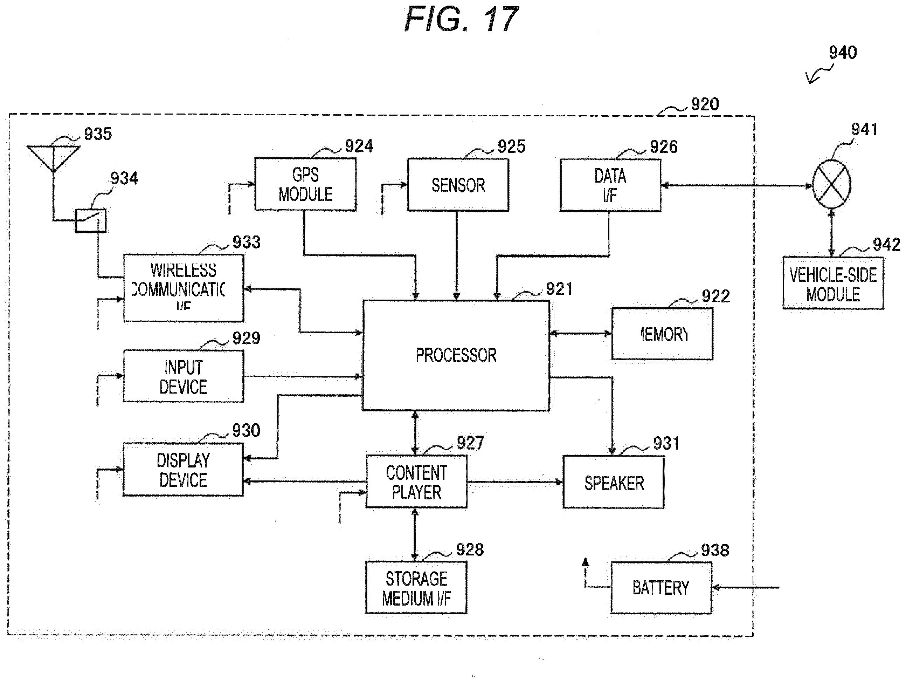

Fig. 17 is a block diagram schematically illustrating a configuration example of a car navigation apparatus 920 to which the technology according to the present disclosure is applicable. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, an antenna switch 934, an antenna 935, and a battery 938.

The processor 921 may be, for example, a CPU or an SoC for controlling the navigation function and other functions of the car navigation apparatus 920. The memory 922 includes a RAM and ROM, and stores programs and data executed by the processor 921.

The GPS module 924 measures a position (e.g., latitude, longitude, and altitude) of the car navigation apparatus 920 using a GPS signal received from the GPS satellite. The sensor 925 may include sensors, such as a gyro sensor, a geomagnetic sensor, and a barometer. The data interface 926 is connected to, for example, a vehicle-mounted network 941 via a terminal which is not illustrated, and obtains data, such as vehicle speed data, generated on the vehicle side.

The content player 927 reproduces content stored in a storage medium (e.g., a compact disc (CD) or a digital versatile disc (DVD) inserted into the storage medium interface 928. The input device 929 may include, for example, a touch sensor that detects touching on the screen of the display device 930, a button, or a switch, and receives operations or information input from users. The display device 930 has a screen, such as an LCD or OLED display, and displays a navigation function or images of the content to be reproduced. The speaker 931 outputs audio of the navigation function or the content to be reproduced.

The wireless communication interface 933 supports at least one of the wireless LAN standards, such as IEEE802.11a, 11b, 11g, 11n, 11ac, and 11ad, and executes wireless communication. The wireless communication interface 933 may communicate with other apparatuses via the wireless LAN access points in the infrastructure mode. In addition, the wireless communication interface 933 may directly communicate with other devices in the ad hoc mode or the direct communication mode, such as Wi-Fi Direct or the like. The wireless communication interface 933 may typically include a base band processor, an RF circuit, a power amplifier, and so on. The wireless communication interface 933 may be a one-chip module integrating a memory storing a communication control program, a processor for executing such a program, and related circuits. In addition to the wireless LAN system, the wireless communication interface 933 may support other communication systems, such as the near-field communication system, the proximal wireless communication system, or a cellular communication system. The antenna switch 934 switches the destinations of the connection of the antenna 935 among a plurality of circuits included in the wireless communication interface 933. The antenna 935 includes one or a plurality of antenna elements, and is used for transmitting and receiving the wireless signal by the wireless communication interface 933.

It is noted that, without limiting to the example of Fig. 17, the car navigation apparatus 920 may include a plurality of antennas. In this case, the antenna switch 934 may be eliminated from the configuration of the car navigation apparatus 920.

The battery 938 supplies power to each block of the car navigation apparatus 920 illustrated in Fig. 17 via a power feed line which is partially indicated in a broken line in the drawing. In addition, the battery 938 stores power fed from the vehicle side.

In the car navigation apparatus 920 illustrated in Fig. 17, the control unit 140, which has been described by referring to Fig. 2, may be implemented in the wireless communication interface 933. In addition, at least part of these functions may be implemented in the processor 921.

In addition, the wireless communication interface 933 may operate as a communication control apparatus and provides wireless communication to the terminal possessed by the user in the vehicle.

In addition, the technology according to the present disclosure may be implemented as a vehicle-mounted system (or a vehicle) 940 including at least one block of the car navigation apparatus 920 described above, the vehicle-mounted network 941, and the vehicle-side module 942. The vehicle-side module 942 generates vehicle-side data, such as a vehicle speed, an engine speed, or failure information, and outputs the generated data to the vehicle-mounted network 941.

In addition, the processing procedures described in the embodiment above may be understood as a method including such series of procedures, a program for causing the computer to execute those series of procedures, or a recording medium storing such a program. As the recording medium, for example, a compact disc (CD), a mini disc (MD), a digital versatile (DVD), a memory card, a Blu-ray (registered trademark) disc, or the like may be used.

### REFERENCE SIGNS LIST

- 10: Communication system
- 100 to 106, 500: Information processing apparatus
- 110: Posture detection unit
- 120: Wireless communication unit
- 130: Operation receiving unit
- 140: Control unit
- 150: Storage unit
- 160: Display unit
- 170: Audio output unit
- 900: Smartphone
- 901: Processor
- 902: Memory
- 903: Storage
- 904: External connection interface
- 906: Camera
- 907: Sensor
- 908: Microphone
- 909: Input device
- 910: Display device
- 911: Speaker
- 913: Wireless communication interface
- 914: Antenna switch
- 915: Antenna
- 917: Bus
- 918: Battery
- 919: Auxiliary controller
- 920: Car navigation apparatus
- 921: Processor
- 922: Memory
- 924: GPS module
- 925: Sensor
- 926: Data interface
- 927: Content player
- 928: Storage medium interface
- 929: Input device
- 930: Display device
- 931: Speaker
- 933: Wireless communication interface
- 934: Antenna switch
- 935: Antenna
- 938: Battery
- 941: Vehicle-mounted network
- 942: Vehicle-side module

## Claims

1. An information processing apparatus (100), comprising
a wireless communication unit (120) configured to establish connection with one or more devices included in a mesh network, in which a plurality of devices is mutually connected by one-to-one wireless communication, and to exchange information with the one or more devices, and
a control unit (140) configured to control the wireless communication unit (120) so as to establish direct connection with a number of devices smaller than an upper limit number of devices that can be connected to the wireless communication unit (120) directly and simultaneously in the mesh network,
wherein the control unit (140) is configured to cause, in a case where the upper limit number of devices directly connected to the wireless communication unit (120) is reached, the wireless communication unit (120) to cut direct connection with a predetermined number of devices among the directly connected devices,
wherein the control unit (140) is configured to select, as a device to be disconnected, a device among the directly connected devices other than a device that is to be disconnected from the mesh network when disconnected from the wireless communication unit (120).

2. The information processing apparatus (100) according to claim 1, wherein
the control unit (140) causes a number of devices smaller than the upper limit number by one to connect to the wireless communication unit (120).

3. The information processing apparatus (100) according to claim 1, wherein
the control unit (140) disconnects a predetermined number of devices among the devices connected to the information processing apparatus (100), in a case where a new device is connected to the mesh network by direct connection to the wireless communication unit (120) so that the upper limit number of devices directly connected to the wireless communication unit (120) is reached.

4. The information processing apparatus (100) according to any preceding claim, wherein
the control unit (140) exchanges information of room for connection with the devices included in the mesh network in terms of the number of other devices that can be directly connected to each device, and provides the information of room for connection to a device that newly tries to join the mesh network,

5. The information processing apparatus (100) according to claim 4, wherein the device that newly joins the mesh network selects a device to be newly connected in accordance with the information of room for connection.

6. The information processing apparatus (100) according to any preceding claim, wherein
in a case where the devices that are directly connected to the information processing apparatus change due to move of the information processing apparatus (100), the control unit (140) obtains, after the change, information of room for connection from the devices included in the mesh network in terms of the number of other devices that can be connected directly to each device.

7. The information processing apparatus according to claim 6, wherein
the control unit (140) selects a device that is to be directly connected after the change in accordance with the information of room for connection.

8. The information processing apparatus (100) according to claim 7, wherein
in a case where no device that can be directly connected after the change is present, the control unit (140) maintains direct connection with the devices that are already directly connected until a device capable of direct connection after the change is allocated.

9. The information processing apparatus (100) according to any preceding claim, wherein
the control unit (140) performs control such that the devices connected to the wireless communication unit (120) directly and simultaneously are switched in a time-division manner.

10. An information processing method, comprising
a controlling procedure of controlling a wireless communication unit (120) to establish direct connection with a number of devices smaller than an upper limit number of devices that can be connected to the wireless communication unit (120) directly and simultaneously in a mesh network in which a plurality of devices is mutually connected by one-to-one wireless communication, in a case where connection is established with one or more device included in the mesh network to exchange information with the device,
wherein the controlling procedure comprises causing, in a case where the upper limit number of devices directly connected to the wireless communication unit (120) is reached, the wireless communication unit (120) to cut direct connection with a predetermined number of devices among the directly connected devices,
wherein the controlling procedure comprises selecting, as a device to be disconnected, a device among the directly connected devices other than a device that is to be disconnected from the mesh network when disconnected from the wireless communication unit (120).

11. A program for causing a computer to execute
a control procedure for controlling a wireless communication unit (120) to establish direct connection with a number of devices smaller than an upper limit number of devices that can be connected to the wireless communication unit (120) directly and simultaneously in a mesh network in which a plurality of devices is mutually connected by one-to-one wireless communication, in a case where connection is established with one or more devices included in the mesh network to exchange information with the one or more devices,
wherein the control procedure comprises causing, in a case where the upper limit number of devices directly connected to the wireless communication unit (120) is reached, the wireless communication unit (120) to cut direct connection with a predetermined number of devices among the directly connected devices,
wherein the control procedure comprises selecting, as a device to be disconnected, a device among the directly connected devices other than a device that is to be disconnected from the mesh network when disconnected from the wireless communication unit (120).

## Patentansprüche

1. Informationsverarbeitungseinrichtung (100), die Folgendes umfasst
eine drahtlose Kommunikationseinheit (120), die dazu ausgelegt ist, eine Verbindung mit einer oder mehreren Vorrichtungen herzustellen, die in einem Maschennetzwerk beinhaltet sind, in dem eine Vielzahl von Vorrichtungen mittels drahtloser Eins-zu-Eins-Kommunikation gegenseitig verbunden ist, und Informationen mit der einen oder den mehreren Vorrichtungen auszutauschen, und
eine Steuereinheit (140), die dazu ausgelegt ist, die drahtlose Kommunikationseinheit (120) zu steuern, um mit einer Anzahl von Vorrichtungen, die kleiner ist als eine obere Grenzanzahl von Vorrichtungen, die direkt und gleichzeitig mit der drahtlosen Kommunikationseinheit (120) in dem Maschennetzwerk verbunden werden können, eine Direktverbindung herzustellen,
wobei die Steuereinheit (140) dazu ausgelegt ist, in einem Fall, in dem die obere Grenzanzahl von Vorrichtungen, die direkt mit der drahtlosen Kommunikationseinheit (120) verbunden sind, erreicht ist, die drahtlose Kommunikationseinheit (120) zu veranlassen, eine Direktverbindung mit einer vorbestimmten Anzahl von Vorrichtungen unter den direkt verbundenen Vorrichtungen zu unterbrechen,
wobei die Steuereinheit (140) dazu ausgelegt ist, als eine zu trennende Vorrichtung unter den direkt verbundenen Vorrichtungen eine andere Vorrichtung auszuwählen als eine Vorrichtung, die vom Maschennetzwerk zu trennen ist, wenn sie von der drahtlosen Kommunikationseinheit (120) getrennt wird.

2. Informationsverarbeitungseinrichtung (100) nach Anspruch 1, wobei
die Steuereinheit (140) veranlasst, dass sich eine Anzahl von Vorrichtungen, die um eins kleiner ist als die obere Grenzanzahl, mit der drahtlosen Kommunikationseinheit (120) verbindet.

3. Informationsverarbeitungseinrichtung (100) nach Anspruch 1, wobei
die Steuereinheit (140) in einem Fall, in dem eine neue Vorrichtung durch Direktverbindung mit der drahtlosen Kommunikationseinheit (120) mit dem Maschennetzwerk verbunden wird, derart, dass die obere Grenzanzahl von Vorrichtungen, die direkt mit der drahtlosen Kommunikationseinheit (120) verbunden sind, erreicht ist, eine vorbestimmte Anzahl von Vorrichtungen unter den Vorrichtungen, die mit der Informationsverarbeitungseinrichtung (100) verbunden sind, trennt.

4. Informationsverarbeitungseinrichtung (100) nach einem der vorhergehenden Ansprüche, wobei
die Steuereinheit (140) Informationen zu einem Verbindungsraum hinsichtlich der Anzahl von anderen Vorrichtungen, die direkt mit jeder Vorrichtung verbunden werden können, mit den Vorrichtungen, die im Maschennetzwerk beinhaltet sind, austauscht und die Informationen zu einem Verbindungsraum einer Vorrichtung bereitstellt, die neu versucht, sich dem Maschennetzwerk anzuschließen.

5. Informationsverarbeitungseinrichtung (100) nach Anspruch 4, wobei die Verbindung, die sich dem Maschennetzwerk neu anschließt, eine Vorrichtung, die neu zu verbinden ist, gemäß den Informationen zu einem Verbindungsraum auswählt.

6. Informationsverarbeitungseinrichtung (100) nach einem der vorhergehenden Ansprüche, wobei
in einem Fall, in dem sich die Vorrichtungen, die direkt mit der Informationsverarbeitungseinrichtung verbunden sind, aufgrund einer Bewegung der Informationsverarbeitungseinrichtung (100) ändern, die Steuereinheit (140) nach der Änderung von den Vorrichtungen, die im Maschennetzwerk beinhaltet sind, Informationen zu einem Verbindungsraum hinsichtlich der Anzahl von anderen Vorrichtungen, die direkt mit jeder Vorrichtung verbunden werden können, erhält.

7. Informationsverarbeitungseinrichtung nach Anspruch 6, wobei
die Steuereinheit (140) eine Vorrichtung, die nach der Änderung direkt zu verbinden ist, gemäß den Informationen zu einem Verbindungsraum auswählt.

8. Informationsverarbeitungseinrichtung (100) nach Anspruch 7, wobei
in einem Fall, in dem keine Vorrichtung vorhanden ist, die nach der Änderung direkt verbunden werden kann, die Steuereinheit (140) eine Direktverbindung mit den Vorrichtungen, die bereits direkt verbunden sind, aufrechterhält, bis eine Vorrichtung, die zu einer Direktverbindung nach der Änderung in der Lage ist, zugeteilt wird.

9. Informationsverarbeitungseinrichtung (100) nach einem der vorhergehenden Ansprüche, wobei
die Steuereinheit (140) eine Steuerung durchführt, derart, dass die Vorrichtungen, die direkt und gleichzeitig mit der drahtlosen Kommunikationseinheit (120) verbunden werden, in einer Zeitteilungsweise geschaltet werden.

10. Informationsverarbeitungsverfahren, das Folgendes umfasst
eine Steuerprozedur zum Steuern einer drahtlosen Kommunikationseinheit (120), um mit einer Anzahl von Vorrichtungen, die kleiner ist als eine obere Grenzanzahl von Vorrichtungen, die in einem Maschennetzwerk, in dem eine Vielzahl von Vorrichtungen mittels drahtloser Eins-zu-Eins-Kommunikation gegenseitig verbunden ist, direkt und gleichzeitig mit der drahtlosen Kommunikationseinheit (120) verbunden werden können, in einem Fall, in dem eine Verbindung mit einer oder mehreren Vorrichtungen, die im Maschennetzwerk beinhaltet sind, hergestellt wird, eine Direktverbindung herzustellen, um Informationen mit der Vorrichtung auszutauschen,
wobei die Steuerprozedur in einem Fall, in dem die obere Grenzanzahl von Vorrichtungen, die direkt mit der drahtlosen Kommunikationseinheit (120) verbunden sind, erreicht ist, umfasst, dass die drahtlose Kommunikationseinheit (120) veranlasst wird, eine Direktverbindung mit einer vorbestimmten Anzahl von Vorrichtungen unter den direkt verbundenen Vorrichtungen zu unterbrechen,
wobei die Steuerprozedur das Auswählen einer anderen Vorrichtung als eine Vorrichtung, die vom Maschennetzwerk zu trennen ist, wenn sie von der drahtlosen Kommunikationseinheit (120) getrennt wird, als eine zu trennende Vorrichtung unter den direkt verbundenen Vorrichtungen umfasst.

11. Programm zum Veranlassen eines Computers, Folgendes auszuführen
eine Steuerprozedur zum Steuern einer drahtlosen Kommunikationseinheit (120), um mit einer Anzahl von Vorrichtungen, die kleiner ist als eine obere Grenzanzahl von Vorrichtungen, die in einem Maschennetzwerk, in dem eine Vielzahl von Vorrichtungen mittels drahtloser Eins-zu-Eins-Kommunikation gegenseitig verbunden ist, direkt und gleichzeitig mit der drahtlosen Kommunikationseinheit (120) verbunden werden können, in einem Fall, in dem eine Verbindung mit einer oder mehreren Vorrichtungen, die im Maschennetzwerk beinhaltet sind, hergestellt wird, eine Direktverbindung herzustellen, um Informationen mit der einen oder den mehreren Vorrichtungen auszutauschen,
wobei die Steuerprozedur in einem Fall, in dem die obere Grenzanzahl von Vorrichtungen, die direkt mit der drahtlosen Kommunikationseinheit (120) verbunden sind, erreicht ist, umfasst, dass die drahtlose Kommunikationseinheit (120) veranlasst wird, eine Direktverbindung mit einer vorbestimmten Anzahl von Vorrichtungen unter den direkt verbundenen Vorrichtungen zu unterbrechen,
wobei die Steuerprozedur das Auswählen einer anderen Vorrichtung als eine Vorrichtung, die vom Maschennetzwerk zu trennen ist, wenn sie von der drahtlosen Kommunikationseinheit (120) getrennt wird, als eine zu trennende Vorrichtung unter den direkt verbundenen Vorrichtungen umfasst.

## Revendications

1. Appareil de traitement d'informations (100), comprenant :
une unité de communication sans fil (120), configurée pour établir une connexion avec un ou plusieurs dispositifs inclus dans un réseau maillé, où une pluralité de dispositifs sont mutuellement connectés par une communication sans fil en correspondance un à un, et pour échanger des informations avec le ou les dispositifs ; et
une unité de contrôle (140), configurée pour contrôler l'unité de communication sans fil (120) de manière à établir une connexion directe avec un nombre de dispositifs inférieur à un nombre limite maximum de dispositifs qui peuvent être connectés directement et simultanément à l'unité de communication sans fil (120) dans le réseau maillé,
l'unité de contrôle (140) étant configurée pour amener l'unité de communication sans fil (120), si le nombre limite maximum de dispositifs connectés directement à l'unité de communication sans fil (120) est atteint, à couper une connexion directe avec un nombre prédéterminé de dispositifs parmi les dispositifs connectés directement,
l'unité de contrôle (140) étant configurée pour sélectionner, comme dispositif à déconnecter, parmi les dispositifs connectés directement, un dispositif autre qu'un dispositif qui doit être déconnecté du réseau maillé quand il est déconnecté de l'unité de communication sans fil (120).

2. Appareil de traitement d'informations (100) selon la revendication 1, dans lequel :
l'unité de contrôle (140) amène un nombre de dispositifs inférieur d'un au nombre limite maximum à se connecter à l'unité de communication sans fil (120).

3. Appareil de traitement d'informations (100) selon la revendication 1, dans lequel :
l'unité de contrôle (140) déconnecte un nombre prédéterminé de dispositifs par les dispositifs connectés à l'appareil de traitement d'informations (100), si un nouveau dispositif est connecté au réseau maillé par une connexion directe à l'unité de communication sans fil (120) de sorte que le nombre limite maximum de dispositifs connectés directement à l'unité de communication sans fil (120) soit atteint.

4. Appareil de traitement d'informations (100) selon l'une quelconque des revendications précédentes, dans lequel :
l'unité de contrôle (140) échange des informations d'espace de connexion avec les dispositifs inclus dans le réseau maillé en termes du nombre d'autres dispositifs qui peuvent être connectés directement à chaque dispositif, et fournit les informations d'espace de connexion à un dispositif qui essaye récemment de joindre le réseau maillé.

5. Appareil de traitement d'informations (100) selon la revendication 4, dans lequel :
le dispositif qui rejoint récemment le réseau maillé sélectionne un dispositif à connecter récemment selon les informations d'espace de connexion.

6. Appareil de traitement d'informations (100) selon l'une quelconque des revendications précédentes, dans lequel :
si les dispositifs qui sont directement connectés à l'appareil de traitement d'informations varient à la suite d'un déplacement de l'appareil de traitement d'informations (100), l'unité de contrôle (140) obtient, après la variation, des informations d'espace de connexion auprès des dispositifs inclus dans le réseau maillé en termes du nombre d'autres dispositifs qui peuvent être connectés directement à chaque dispositif.

7. Appareil de traitement d'informations selon la revendication 6, dans lequel :
l'unité de contrôle (140) sélectionne un dispositif qui peut être connecté directement après la variation selon les informations d'espace de connexion.

8. Appareil de traitement d'informations (100) selon la revendication 7, dans lequel :
si aucun dispositif qui peut être connecté directement après la variation n'est présent, l'unité de contrôle (140) maintient une connexion directe avec les dispositifs qui sont déjà connectés directement jusqu'à ce qu'un dispositif capable de se connecter directement après la variation soit affecté.

9. Appareil de traitement d'informations (100) selon l'une quelconque des revendications précédentes, dans lequel :
l'unité de contrôle (140) réalise un contrôle de sorte que les dispositifs connectés directement et simultanément à l'unité de communication sans fil (120) soient commutés par répartition dans le temps.

10. Procédé de traitement d'informations, comprenant :
une procédure de contrôle consistant à contrôler une unité de communication sans fil (120) pour établir une connexion directe avec un nombre de dispositifs inférieur à un nombre limite maximum de dispositifs qui peuvent être connectés directement et simultanément à l'unité de communication sans fil (120) dans un réseau maillé où une pluralité de dispositifs sont mutuellement connectés par une communication sans fil en correspondance un à un, si une connexion est établie avec un ou plusieurs dispositifs inclus dans le réseau maillé, pour échanger des informations avec le dispositif,
la procédure de contrôle consistant à amener l'unité de communication sans fil (120), si le nombre limite maximum de dispositifs connectés directement à l'unité de communication sans fil (120) est atteint, à couper une connexion directe avec un nombre prédéterminé de dispositifs parmi les dispositifs connectés directement,
la procédure de contrôle consistant à sélectionner, comme dispositif à déconnecter, parmi les dispositifs connectés directement, un dispositif autre qu'un dispositif qui doit être déconnecté du réseau maillé quand il est déconnecté de l'unité de communication sans fil (120).

11. Programme pour amener un ordinateur à exécuter :
une procédure de contrôle consistant à contrôler une unité de communication sans fil (120) pour établir une connexion directe avec un nombre de dispositifs inférieur à un nombre limite maximum de dispositifs qui peuvent être connectés directement et simultanément à l'unité de communication sans fil (120) dans un réseau maillé où une pluralité de dispositifs sont mutuellement connectés par une communication sans fil en correspondance un à un, si une connexion est établie avec un ou plusieurs dispositifs inclus dans le réseau maillé, pour échanger des informations avec le ou les dispositifs,
la procédure de contrôle consistant à amener l'unité de communication sans fil (120), si le nombre limite maximum de dispositifs connectés directement à l'unité de communication sans fil (120) est atteint, à couper une connexion directe avec un nombre prédéterminé de dispositifs parmi les dispositifs connectés directement,
la procédure de contrôle consistant à sélectionner, comme dispositif à déconnecter, parmi les dispositifs connectés directement, un dispositif autre qu'un dispositif qui doit être déconnecté du réseau maillé quand il est déconnecté de l'unité de communication sans fil (120).
